# EUROPEAN PATENT SPECIFICATION

(11) **EP 4 304 024 B1**
(45) Date of publication and mention of the grant of the patent: **22.04.2026**
(21) Application number: 22749103.2
(22) Date of filing: 28.01.2022
(51) Int. Cl.: H01S 3/067, H01S 3/094, H04B 10/294, H04J 14/02, G02B 6/14, G02B 6/28

(54) **PUMPING LIGHT SOURCE, OPTICAL AMPLIFICATION SYSTEM AND RECONFIGURABLE OPTICAL ADD-DROP MULTIPLEXER**
PUMPLICHTQUELLE, OPTISCHES VERSTÄRKUNGSSYSTEM UND REKONFIGURIERBARER OPTISCHER ADD-DROP-MULTIPLEXER
SOURCE DE LUMIÈRE POMPE, SYSTÈME AMPLIFICATEUR OPTIQUE ET MULTIPLEXEUR OPTIQUE ADD-DROP RECONFIGURABLE

(30) Priority: 04.02.2021 CN 202110157788
(43) Date of publication of application: 10.01.2024
(73) Proprietor: Huawei Technologies Co., Ltd., Shenzhen, Guangdong 518129 (CN)
(72) Inventor: ZHANG, Kai, Shenzhen, Guangdong 518129 (CN); TAN, Sisi, Shenzhen, Guangdong 518129 (CN); WU, Bo, Shenzhen, Guangdong 518129 (CN)
(74) Representative: MERH-IP Matias Erny Reichl Hoffmann Patentanwälte PartG mbB
(86) International application number: PCT/CN2022/074705
(87) International publication number: WO 2022/166824

(56) References cited:
- EP-A1- 3 029 860
- EP-A1- 3 029 860
- EP-A2- 1 067 409
- WO-A1-2013/077434
- CN-A- 1 312 623
- CN-A- 103 633 543
- CN-A- 104 134 924
- CN-A- 104 134 924
- CN-A- 110 289 539
- CN-U- 208 904 394
- CN-U- 209 963 478
- US-A1- 2015 085 351
- US-A1- 2015 085 351
- US-B2- 6 738 184
- SALEH A A M ET AL: "REFLECTIVE SINGLE-MODE FIBER-OPTIC PASSIVE STAR COUPLERS", JOURNAL OF LIGHTWAVE TECHNOLOGY, IEEE, USA, vol. 6, no. 3, 1 March 1988 (1988-03-01), pages 392 - 398, XP002034036, ISSN: 0733-8724, DOI: 10.1109/50.4016

## Description

### TECHNICAL FIELD

This application relates to the field of optical communication technologies, and in particular, to a pump light source, an optical amplification system, a reconfigurable optical add-drop multiplexer (reconfigurable optical add-drop multiplexer, ROADM), and a method for providing pump light.

### BACKGROUND

An optical amplifier is an important unit in an optical communication network, and is mainly configured to compensate for a power loss resulted during transmission of an optical signal. Generally, one or more single-mode pump lasers are integrated into one optical amplifier, and the single-mode pump laser provides needed single-mode pump light for the optical amplifier to which the single-mode pump laser belongs.

Each optical amplifier needs to be configured with a single-mode pump laser. If the single-mode pump laser is damaged, there are difficulties in maintenance and replacement. In addition, output power of the single-mode pump laser is limited, and cannot meet a requirement of output power of the optical amplifier.
Document EP 3 029 860 A1 generally discloses an optical amplification system comprising at least one input optical waveguide carrying an optical data signal to be amplified, at least one output optical waveguide carrying an amplified optical data signal, and at least one optical amplifier disposed between the input optical waveguide and the output optical waveguide. A photonic lantern is placed between a multimode pump source and the optical amplifier to transfer energy from the multimode pump source to the optical amplifier; the photonic lantern is connected on the one hand to the output of the multimode pump source and on the other hand to the input of a plurality of pump optical waveguides. A variable optical attenuator can be placed on each of the pump optical waveguides, between the photonic lantern and the optical amplifier.
Document CN 104 134 924 A generally discloses an EDFA (Erbium-doped Optical Fiber Amplifier) comprising an amplification light path and a pumping light source, wherein the pumping light source outputs pumping light to the amplification light path for amplification and comprises a multi-mode pumping laser and a mode converter, and the output end of the multi-mode pumping laser and the input end of the mode converter are connected so as to convert multi-mode pumping light emitted from the multi-mode pumping light source into single-mode pumping light.
Document US 2015/085351 A1 generally discloses an optical amplifier including a multi-mode pump laser module, a multi-mode waveguide, a multi-mode to multiple single-mode fiber converter module and a plurality of single-mode cores. The multi-mode pump laser module emits pump light having a plurality of modes to the multi-mode fiber or waveguide. The multi-mode waveguide propagates the emitted pump light to the converter module. The converter module receives the pump light and distributes the pump light approximately uniformly to a plurality of single-mode cores.

### SUMMARY

This application provides a pump light source, an optical amplification system, a ROADM, and a method for providing pump light, to provide a plurality of channels of single-mode pump light for an optical amplifier. In particular, this application provides a pump light source, an optical amplification system, and a reconfigurable optical add-drop multiplexer, having the features of claims 1, 9 and 14 respectively. The dependent claims relate to preferred embodiments.

According to one aspect, this application provides a pump light source. The pump light source includes a light emitting unit, a mode converter, and an optical interface unit. The light emitting unit is configured to output multi-mode pump light. The mode converter is configured to: convert the multi-mode pump light outputted by the light emitting unit into a plurality of channels of single-mode pump light, and output the plurality of channels of single-mode pump light. The optical interface unit is configured to be connected to an optical amplifier via an optical transmission medium, to provide at least one channel of single-mode pump light in the plurality of channels of single-mode pump light for a corresponding optical amplifier via the optical transmission medium. The pump light source is located outside the optical amplifier.

The pump light source provided in this application is located outside the optical amplifier, and is connected to the optical amplifier via the optical interface unit and the optical transmission medium. If the pump light source malfunctions, a connection between the pump light source and the optical amplifier may be disconnected to facilitate maintenance and replacement. In addition, the pump light source converts the multi-mode pump light into the plurality of channels of single-mode pump light by the mode converter, and then provides the at least one channel of single-mode pump light for the corresponding optical amplifier via the optical interface unit and the optical transmission medium. In this way, the single-mode pump light needed by the optical amplifier can be centrally managed, improving integration of the pump light source.

In some examples, the plurality of channels of single-mode pump light correspond to a plurality of optical amplifiers, and different channels of single-mode pump light provide single-mode pump light for different optical amplifiers. In this way, a plurality of optical amplifiers share one pump light source. This helps reduce cost of the optical amplifiers. In some other examples, the plurality of channels of single-mode pump light can provide at least two channels of single-mode pump light for a single optical amplifier, providing backup for single-mode pump light.

In some examples, the optical interface unit includes an optical fiber interface or an optical backplane interface. When the optical interface unit includes the optical fiber interface, the optical transmission medium is an optical fiber, and is connected to the optical amplifier via the optical fiber. When the optical interface unit includes the optical backplane interface, the optical transmission medium is an optical backplane.

In some examples, the light emitting unit includes at least two multi-mode pump lasers and one power beam combiner. The at least two multi-mode pump lasers each are configured to output one channel of multi-mode pump light. The power beam combiner is configured to: combine the at least two channels of multi-mode pump light outputted by the at least two multi-mode pump lasers into one channel of multi-mode pump light, and output the one channel of multi-mode pump light to the mode converter. A plurality of multi-mode pump lasers mutually back up. When some multi-mode pump lasers malfunction, the remaining multi-mode pump lasers can ensure normal operation of the pump light source.

In some examples, the multi-mode pump lasers in the at least two multi-mode pump lasers are configured to output multi-mode pump light at same optical power. When all the multi-mode pump lasers operate normally, each multi-mode pump laser outputs the multi-mode pump light at default optical power. If some multi-mode pump lasers malfunction and cannot emit light normally, the remaining multi-mode pump lasers that can operate normally output the multi-mode pump light at optical power greater than the default optical power, so that overall optical power output by the light emitting unit remains unchanged. In this way, a problem of unstable output optical power caused by replacement and starting a new multi-mode pump laser can be avoided.

In some other examples, the light emitting unit includes a multi-mode pump laser, and the multi-mode pump laser outputs one channel of multi-mode pump light.

In embodiments of this application, the multi-mode pump light outputted by the light emitting unit is provided by the multi-mode pump laser, and output power of the multi-mode pump light laser is higher than output power of the single-mode pump laser. Therefore, the pump light source provided in this application can better meet an output power requirement of the optical amplifier.

In some examples, the mode converter is any one of the following: a photonic lantern or a multi-plane light converter (multi-plane light converter, MPLC). The photonic lantern is an optical fiber type photonic lantern or a waveguide type photonic lantern.

In a possible implementation, the pump light source further includes a mode field converter, and the mode field converter is configured to perform mode field matching between an output end of the light emitting unit and an input end of the mode converter. Herein, the mode field matching refers to converting a mode field size of the multi-mode pump light outputted by the output end of the light emitting unit, to match a mode field size that can be inputted to the input end of the mode converter. The output end of the light emitting unit can be decoupled from the input end of the mode converter by the mode field converter. By selecting a proper mode field converter, a light emitting unit with any end face size and a mode converter with any end face size can be combined.

In some examples, the mode field converter is any one of the following: an optical fiber mode field converter, a lens, or a polarization-irrelevant optical waveguide.

In some examples, a plurality of components in the light emitting unit are packaged together and then connected to a pigtail, and the multi-mode pump light is outputted from the pigtail of the light emitting unit. In this case, one end of the pigtail is the output end of the light emitting unit.

In some other examples, after the plurality of components in the light emitting unit are packaged together, the pigtail and an optical fiber collimator are sequentially connected, and the multi-mode pump light is outputted from the optical fiber collimator through the pigtail of the light emitting unit. In this case, the optical fiber collimator is the output end of the light emitting unit.

In still some other examples, the components in the light emitting unit are not separately packaged, but are packaged together with other components in the pump light source. In this case, the light emitting unit does not include the pigtail and the optical fiber collimator, and the output end of the light emitting unit is an end face of an unpackaged multi-mode pump laser or an output port of the power beam combiner.

In some examples, the mode converter is an optical fiber type photonic lantern; and the mode field converter is an optical fiber mode field converter, and an input end of the optical fiber mode field converter is coupled to, for example, connected to or spatially aligned to, an output end of the light emitting unit. An output end of the optical fiber mode field converter is coupled to, for example, connected to or spatially aligned to, an input end of the optical fiber type photonic lantern. Both the mode converter and the mode field converter are formed by an optical fiber, and a low-loss connection among the light emitting unit, the mode converter, and the mode field converter may be implemented through splicing or the like. This further helps reduce costs of the pump light source.

In some other examples, the mode converter is a waveguide type photonic lantern or a multi-plane light converter. The mode field converter is a lens, and the lens is located on an optical path between the output end of the light emitting unit and the mode converter. In these examples, propagation of the pump light among the output end of the light emitting unit, the mode field converter, and the mode converter is implemented in a form of space alignment, and a volume of each optical device is small. This helps reduce a volume of the pump light source.

In an embodiment of this application, a photonic lantern or an MPLC is used as a mode converter to perform mode conversion. A principle of the mode conversion is that the multi-mode pump light is converted into a plurality of channels of single-mode pump light based on mode field distribution positions of modes of the multi-mode pump light. In this case, a wavelength of the multi-mode pump light outputted by the light emitting unit is same as a wavelength of the single-mode pump light outputted by the mode converter. For example, the wavelength of the multi-mode pump light outputted by the light emitting unit and the wavelength of the single-mode pump light outputted by the mode converter are both 980 nm.

In a possible implementation, the mode converter includes an optical fiber laser and an optical splitter. The optical fiber laser is configured to convert the multi-mode pump light outputted by the light emitting unit into one channel of single-mode pump light, and the optical fiber laser uses the light emitting unit as a pump source. The optical splitter is configured to split the single-mode pump light outputted by the optical fiber laser into a plurality of channels of single-mode pump light. For example, the optical splitter splits the single-mode pump light outputted by the optical fiber laser into a plurality of channels of single-mode pump light with equal power.

In this case, the light emitting unit is equivalent to a pump source of the optical fiber laser, and is configured to provide energy for the optical fiber laser. In some examples, a wavelength of the multi-mode pump light outputted by the multi-mode pump laser is different from a wavelength of the single-mode pump light outputted by the optical fiber laser. For example, the wavelength of the multi-mode pump light outputted by the multi-mode pump laser is 915 nm, and the wavelength of the single-mode pump light outputted by the optical fiber laser is 980 nm.

In a possible implementation, to separately control optical power of channels of single-mode pump light, the pump light source further includes a variable optical attenuator (variable optical attenuator, VOA) array. The VOA array is configured to control the optical power of channels of single-mode pump light in the plurality of channels of single-mode pump light. When a quantity of target objects that need to use single-mode pump light (for example, a quantity of optical amplifiers, or a quantity of functional units that need to use single-mode pump light and that are of the optical amplifier) is less than a quantity of channels of single-mode pump light that can be provided by the pump light source, some interfaces in an optical interface unit or an output port of an optical transmission medium connected to the optical interface unit may not be connected to an optical amplifier, and single-mode pump light corresponding to these interfaces is controlled by the VOA array not to be outputted, to avoid damage to human eyes caused by strong light.

Because the multi-mode pump laser in the light emitting unit has a mode flicker problem and the output ends of the mode converter have an excessively large output power difference, a requirement of the optical amplifier may not be met in the plurality of single-mode pump light outputted by the mode converter. Therefore, in some examples, the pump light source further includes a power leveler. The power leveler is configured to mix the optical power of the plurality of channels of single-mode pump light received from mode converter 20 and then perform average allocation on the optical power, so that the optical power of the outputted plurality of channels of single-mode pump light is the same.

In some examples, the optical amplifier is an independent optical amplifier, or an optical amplifier integrated into an optical communication apparatus (for example, an optical transform unit (optical transform unit, OTU)).

In some examples, a wavelength of the single-mode pump light outputted by the pump light source is 980 nm. A wavelength of signal light applicable to the optical amplifier belongs to an original wavelength (original, O) waveband, a conventional (conventional, C) waveband, or a long-wavelength (long-wavelength, L) waveband. Wavelength ranges corresponding to the O waveband, the C waveband, and the L waveband are 1260 nm to 1360 nm, 1530 nm to 1565 nm, and 1565 nm to 1625 nm, respectively.

According to another aspect, this application further provides an optical amplification system. The optical amplification system includes any one of the foregoing pump light source, optical amplifier, and optical transmission medium. The optical transmission medium is configured to transmit, to the optical amplifier, at least one channel of single-mode pump light outputted by the pump light source.

In an embodiment of this application, the optical amplifier includes a plurality of passive components.

In the optical amplification system, there are one or more optical amplifiers. When there are a plurality of optical amplifiers, the plurality of optical amplifiers may be located on different optical line boards. Providing single-mode pump light for a plurality of optical amplifiers by one pump light source can reduce costs of the optical amplification system.

In some examples, the optical amplifier includes at least one stage of amplification optical path, and any stage of amplification optical path includes a wavelength division multiplexer and an optical fiber. The wavelength division multiplexer is configured to combine received signal light and received single-mode pump light into one channel and output the channel to the optical fiber. The optical fiber is configured to: amplify corresponding signal light by using received single-mode pump light, and output signal light after the amplification. The signal light received by the wavelength division multiplexer of a first-stage amplification optical path in the at least one stage of amplification optical path is received from outside the optical amplification system, and the signal light received by the wavelength division multiplexer of the amplification optical path except the first-stage amplification optical path in the at least one stage of amplification optical path is amplified signal light outputted by a previous-stage amplification optical path.

In some examples, the optical fiber is an erbium-doped fiber (erbium-doped fiber, EDF) or an erbium ytterbium co-doped fiber (erbium ytterbium co-doped fiber, EYDF). In embodiments of this application, an amplifier using the EDF as an optical fiber is also referred to as an erbium-doped fiber amplifier (erbium-doped fiber amplifier, EDFA), and an amplifier using the EYDF as an optical fiber is also referred to as an erbium ytterbium co-doped fiber amplifier (erbium ytterbium co-doped fiber amplifier, EYDFA).

In some examples, any stage of amplification optical path further includes a first optical splitter, a first detector, and a first VOA. The first splitter is configured to split the received single-mode pump light provided by the pump light source into a first part of the single-mode pump light and a second part of the single-mode pump light. The first detector is configured to detect optical power of the first part of the single-mode pump light to obtain a first power value. The first VOA is configured to: adjust optical power of the received second part of the single-mode pump light based on the first power value, and output the second part of adjusted single-mode pump light to a corresponding wavelength division multiplexer.

In some examples, the optical amplifier further includes a second VOA. The second VOA is located between two adjacent stages of amplification optical paths, and is configured to: adjust optical power of signal light outputted by a previous-stage amplification optical path, and output adjusted signal light to a next-stage amplification optical path. By disposing the second VOA, the output optical power of the optical amplifier can be conveniently adjusted.

In some examples, the first-stage amplification optical path in the at least one stage of amplification optical path further includes a second splitter and a second detector. The second splitter is configured to split received signal light into a first part of signal light and a second part of signal light. The second detector is configured to detect optical power of the first part of signal light to obtain a second power value. A last-stage of amplification optical path in the at least one stage of amplification optical path further includes a third splitter and a third detector. The third splitter is configured to split received signal light into a third part of signal light and a fourth part of signal light, and output the third part of signal light. The third detector is configured to detect optical power of the fourth part of signal light to obtain a third power value. The second VOA is configured to: adjust, based on the second power value and the third power value, optical power of the received signal light outputted by the previous-stage amplification optical path, and output the second part of adjusted signal light to the next-stage amplification optical path. The optical amplifier detects optical power of signal light inputted to the optical amplifier by the second splitter and the second detector, detects optical power of signal light outputted by the optical amplifier by the third splitter and the third detector, and adjusts the second VOA based on the optical power of the signal light inputted to the optical amplifier and the optical power of the signal light outputted by the optical amplifier, to adjust output optical power of the optical amplifier to target optical power.

In some examples, in the at least one stage of amplification optical path, any stage of amplification optical path of first N-1 stages of amplification optical paths further includes a gain flattening filter (gain flattening filter, GFF). The GFF is configured to: filter amplified signal light outputted by an optical fiber in the amplification optical path of a stage to which the GFF belongs, and output signal light after the filtering. N is a quantity of stages of an amplified optical path included in the optical amplifier, where N is greater than 1. The previous N-1 stages of amplification optical paths are first-stage to (N-1)^{th}-stage amplification optical paths along a propagation direction of signal light. Flatness decreases each time the signal light passes through the amplification optical path. If the flatness decreases to a specific extent, the communication cannot be normally performed. By using the GFF, flatness of the amplified signal light outputted by corresponding amplification optical path can be improved, to support multi-stage amplification of the signal light, and avoid impact of the multi-stage amplification on transmission quality of the signal light.

In some examples, any stage of amplification optical path further includes a first isolator and a second isolator. The first isolator is configured to: output the received signal light to a corresponding wavelength division multiplexer, and block light from the corresponding wavelength division multiplexer. The second isolator is configured to: transmit amplified signal light outputted by the corresponding optical fiber to the next-stage amplification optical path, and block light from the next-stage optical path. The signal light received by the first isolator of the first-stage amplification optical path in the at least one stage of the amplification optical path is received from outside the optical amplification system, and the signal light received by the first isolator of the amplification optical path except the first-stage amplification optical path in the at least one stage of amplification optical path is amplified signal light outputted by the previous-stage amplification optical path. By using the first isolator and the second isolator, noise figure degradation caused by consumption of pump optical power because of reflection of amplifier spontaneous emission (amplifier spontaneous emission, ASE) noise to the optical fiber can be avoided, and self-excitation can also be avoided in the optical fiber.

According to another aspect, this application further provides a reconfigurable optical add-drop multiplexer (reconfigurable optical add-drop multiplexer, ROADM). The ROADM includes a plurality of boards and any one of the foregoing optical amplification systems. The optical amplifier is integrated onto one or more boards. The pump light source and the optical amplifier are located on separate boards. For example, the optical amplifier is integrated onto an optical amplifier board or an optical line board, and the pump light source is integrated on a pump light source board.

According to still another aspect, this application further provides a method for providing pump light. The pump light is provided by a pump light source. The method includes: generating multi-mode pump light; converting the multi-mode pump light into a plurality of channels of single-mode pump light; and providing at least one channel of single-mode pump light in the plurality of channels of single-mode pump light for a corresponding optical amplifier. The pump light source is located outside the optical amplifier.

In some examples, the providing at least one channel of single-mode pump light in the plurality of channels of single-mode pump light for a corresponding optical amplifier includes: determining target single-mode pump light corresponding to a target optical amplifier from the plurality of channels of single-mode pump light; and adjusting optical power of the target single-mode pump light based on a requirement of output power of the target optical amplifier, to provide adjusted target single-mode pump light for the target optical amplifier.

In some examples, the method further includes: blocking idle single-mode pump light with no corresponding optical amplifier, so that the idle single-mode pump light is not outputted from the pump light source. By blocking the idle single-mode pump light, leakage of the idle single-mode pump light, which may cause damage to human eyes, can be avoided.

In some examples, the pump light source includes at least two multi-mode pump lasers and a power beam combiner, and the generating one channel of multi-mode pump light by using a pump light source includes: outputting one channel of multi-mode pump light by at least two multi-mode pump lasers at same optical power; and combining the at least two channels of multi-mode pump light outputted by the at least two multi-mode pump lasers into one channel of multi-mode pump light by using the power beam combiner.

In some examples, when some multi-mode pump lasers malfunction and cannot emit light, the method further includes: increasing output optical power of a multi-mode pump laser that does not malfunction, so that the optical power of the multi-mode pump light outputted by the power beam combiner remains unchanged.

In some examples, the method further includes: after the adjusted target single-mode pump light is provided to the target optical amplifier, detecting optical power of the target single-mode pump light received by the target optical amplifier; and adjusting, inside the target optical amplifier based on the detected optical power of the target single-mode pump light, the optical power of the target single-mode pump light received by the target optical amplifier.

### BRIEF DESCRIPTION OF DRAWINGS

FIG. 1 is a schematic diagram of a structure of a pump light source according to an embodiment of this application;
FIG. 2 is a schematic diagram of a structure of a light emitting unit according to an embodiment of this application;
FIG. 3 is a schematic diagram of a structure of another pump light source according to an embodiment of this application;
FIG. 4 is a schematic diagram of a structure of another pump light source according to an embodiment of this application;
FIG. 5 is a schematic diagram of a structure of an optical fiber mode field converter according to an embodiment of this application;
FIG. 6 is a schematic diagram of a structure of an optical fiber type photonic lantern according to an embodiment of this application;
FIG. 7 is a schematic diagram of two end faces of the optical fiber type photonic lantern in FIG. 6;
FIG. 8 is a schematic diagram of a structure of another pump light source according to an embodiment of this application;
FIG. 9 is a schematic diagram of a structure of a waveguide type photonic lantern according to an embodiment of this application;
FIG. 10 is a schematic diagram of a structure of another pump light source according to an embodiment of this application;
FIG. 11 is a schematic diagram of a structure of a transmissive MPLC according to an embodiment of this application;
FIG. 12 is a schematic diagram of a structure of another pump light source according to an embodiment of this application;
FIG. 13 is a schematic diagram of a structure of an optical amplification system according to an embodiment of this application;
FIG. 14A and FIG. 14B are schematic diagrams of a structure of an optical amplifier according to an embodiment of this application;
FIG. 15 is a schematic diagram of a structure of a ROADM according to an embodiment of this application;
FIG. 16 is a schematic diagram of a structure of an optical circuit board in FIG. 15;
FIG. 17 is a schematic diagram of a structure of an optical tributary board in FIG. 15;
FIG. 18 is a schematic diagram of a structure of another optical communication device according to an embodiment of this application; and
FIG. 19 is a schematic flowchart of a method for providing pump light according to an embodiment of this application.

### DESCRIPTION OF EMBODIMENTS

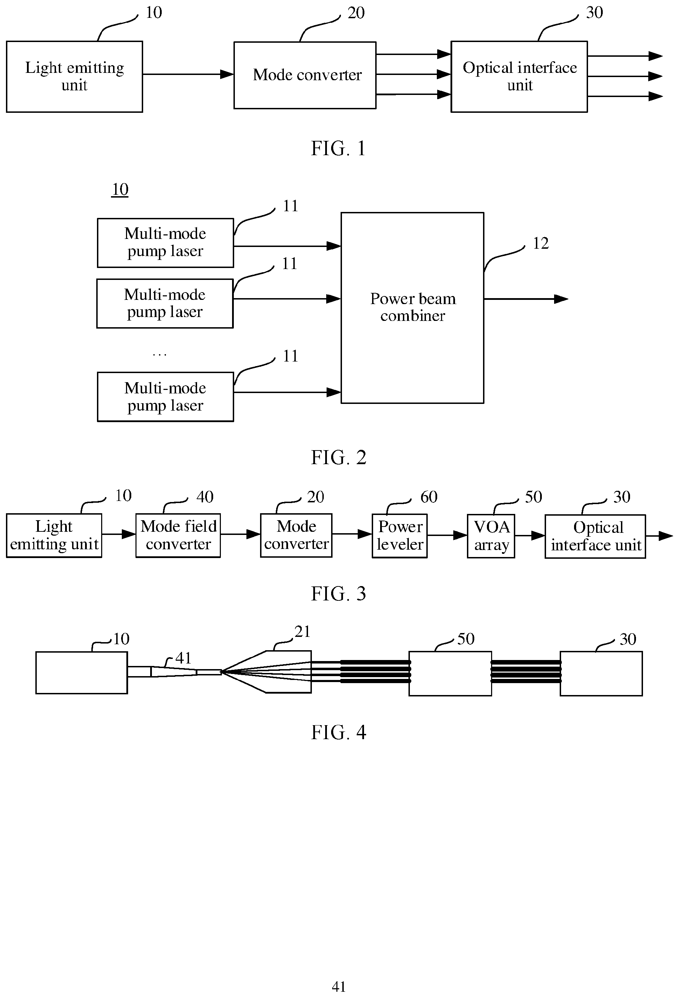

FIG. 1 is a schematic diagram of a structure of a pump light source according to an embodiment of this application. As shown in FIG. 1, the pump light source includes a light emitting unit 10, a mode converter 20, and an optical interface unit 30. The light emitting unit 10 is configured to output multi-mode pump light. The mode converter 20 is configured to: convert the multi-mode pump light outputted by the light emitting unit 10 into a plurality of channels of single-mode pump light, and output the plurality of channels of single-mode pump light. The optical interface unit 30 is configured to be connected to an optical amplifier via an optical transmission medium, to provide at least one channel of single-mode pump light in the plurality of channels of single-mode pump light for a corresponding optical amplifier via the optical transmission medium. The pump light source is located outside the optical amplifier.

The pump light source provided in this application is located outside the optical amplifier, and is connected to the optical amplifier via the optical interface unit and the optical transmission medium. If the pump light source malfunctions, a connection between the pump light source and the optical amplifier may be disconnected to facilitate maintenance and replacement. In addition, the pump light source converts the multi-mode pump light into the plurality of channels of single-mode pump light by the mode converter, and then provides the at least one channel of single-mode pump light for the corresponding optical amplifier via the optical interface unit and the optical transmission medium. In this way, the single-mode pump light needed by the optical amplifier can be centrally managed, improving integration of the pump light source.

In some examples, the plurality of channels of single-mode pump light correspond to a plurality of optical amplifiers, and different channels of single-mode pump light provide single-mode pump light for different optical amplifiers. In this way, a plurality of optical amplifiers share one pump light source. This helps reduce cost of the optical amplifiers. In some other examples, the plurality of channels of single-mode pump light can provide at least two channels of single-mode pump light for a single optical amplifier, providing backup for single-mode pump light.

For example, the optical amplifier is an individual optical amplifier, or an optical amplifier integrated into an optical communication apparatus. For example, the optical communication apparatus is an OTU. Output power of a laser in the OTU is limited after modulation. Therefore, a built-in optical amplifier is needed to amplify the power. In embodiments of this application, the pump light source is further located outside the optical communication apparatus.

In embodiments of this application, a wavelength of signal light corresponding to the optical amplifier belongs to an original wavelength (original, O) waveband, a conventional (conventional, C) waveband, or a long-wavelength (long-wavelength, L) waveband. Wavelength ranges corresponding to the O waveband, the C waveband, and the L waveband are 1260 nm to 1360 nm, 1530 nm to 1565 nm, and 1565 nm to 1625 nm, respectively.

In embodiments of this application, there may be one or more channels of multi-mode pump light outputted by the light emitting unit 10. In the following description, an example in which the light emitting unit 10 outputs one channel of multi-mode pump light is used.

FIG. 2 is a schematic diagram of a structure of a light emitting unit according to an embodiment of this application. As shown in FIG. 2, the light emitting unit 10 includes at least two multi-mode pump lasers 11 and one power beam combiner 12. Each multi-mode pump laser 11 is configured to output one channel of multi-mode pump light. The power beam combiner 12 is configured to combine the at least two channels of multi-mode pump light outputted by the at least two multi-mode pump lasers 11 into one channel of multi-mode pump light for outputting.

Alternatively, in some other embodiments, the light emitting unit 10 includes one multi-mode pump laser, and the multi-mode pump laser outputs the channel of multi-mode pump light.

In embodiments of this application, the multi-mode pump light outputted by the light emitting unit is provided by the multi-mode pump laser, and output power of the multi-mode pump light laser is higher than output power of the single-mode pump laser. Therefore, the pump light source provided in this application can better meet an output power requirement of the optical amplifier.

In this embodiment of this application, the multi-mode pump laser is a semiconductor laser.

In some examples, a plurality of components in the light emitting unit are packaged together and then connected to a pigtail, and the multi-mode pump light is outputted from the pigtail of the light emitting unit. In this case, one end of the pigtail is an output end of the light emitting unit. In some other examples, after the plurality of components in the light emitting unit are packaged together, the pigtail and an optical fiber collimator are sequentially connected, and the multi-mode pump light is outputted from the optical fiber collimator via the pigtail of the light emitting unit. In this case, the optical fiber collimator is the output end of the light emitting unit. In still some other examples, the components in the light emitting unit are not separately packaged, but are packaged together with other components in the pump light source. In this case, the light emitting unit does not include the pigtail and the optical fiber collimator, and the output end of the light emitting unit is an end face of an unpackaged multi-mode pump laser or an output port of the power beam combiner.

In an embodiment of this application, a mode converter 20 has one input end and a plurality of output ends. The input end of the mode converter 20 is configured to be coupled to an output end of the light emitting unit 10, to receive the multi-mode pump light outputted by the light emitting unit 10. The mode converter 20 is configured to: convert the received multi-mode pump light into a plurality of channels of single-mode pump light, and output each of the plurality of channels of single-mode pump light from one output end to the optical interface unit 30.

FIG. 3 is a schematic diagram of a structure of another pump light source according to an embodiment of this application. As shown in FIG. 3, in addition to the light emitting unit 10, the mode converter 20, and the optical interface unit 30, the pump light source further includes a mode field converter 40. The mode field converter 40 is configured to perform mode field matching between the output end of the light emitting unit 10 and the input end of the mode converter 20. Therefore, the mode field converter 40 is also referred to as a mode field matcher.

In some examples, the mode converter 20 is a photonic lantern or a multi-plane light converter. The photonic lantern is an optical fiber type photonic lantern or a waveguide type photonic lantern. The mode field converter 40 is an optical fiber mode field converter, a lens, or a polarization-irrelevant optical waveguide. The polarization-irrelevant optical waveguide means that in an optical waveguide, propagation of light is irrelevant to a polarization direction of the light.

In some examples, the pump light source further includes a VOA array 50, configured to control optical power of each channel of single-mode pump light in the plurality of channels of single-mode pump light. The VOA array includes a plurality of VOAs. Each VOA corresponds to one channel of single-mode pump light, each VOA is connected to one output end of the mode converter 20, and each VOA is configured to control whether the corresponding single-mode pump light is outputted from the pump light source and control output power of the corresponding single-mode pump light. When a quantity of target objects that need to use the single-mode pump light (for example, a quantity of optical amplifiers, or a quantity of functional units that need the single-mode pump light of the optical amplifier) is less than a quantity of channels of single-mode pump light that can be provided by the pump light source, some interfaces in the optical interface unit 30 may not be connected to the optical amplifier, or the other end of the optical transmission medium connected to the optical interface unit may not be connected to the optical amplifier. The VOA array controls the single-mode pump light corresponding to these interfaces not to be outputted, to avoid damage to human eyes caused by strong light.

In the output optical power of the multi-mode pump laser, power distribution of different transverse modes varies with time, causing that a bright and dark distribution of light spots outputted by the light emitting unit varies with time accordingly. This phenomenon is referred to as a mode flicker problem. Because the multi-mode pump laser in the light emitting unit has the mode flicker problem and the output ends of the mode converter 20 have an excessively large output power difference, optical power of some single-mode pump light in the plurality of channels of single-mode pump light outputted by the mode converter 20 may not meet a requirement of the optical amplifier. Therefore, the pump light source further includes a power leveler 60. The power leveler 60 is configured to adjust the optical power of the plurality of channels of single-mode pump light received from the mode converter 20, to obtain the plurality of channels of single-mode pump light with the same optical power.

In this embodiment of this application, a quantity of input ends of the power leveler 60 is greater than or equal to a quantity of output ends of the power leveler 60. The quantity of the input ends of the power leveler 60 is determined by a quantity of the output ends of the mode converter 20, and the quantity of the input ends of the power scrambler 60 is equal to the quantity of the output ends of the mode converter 20.

In this embodiment, the power leveler 60 is connected between the output end of the mode converter 20 and the VOA array 50. Optical power of the plurality of channels of single-mode pump light outputted by the mode converter 20 is first averagely allocated, and then the plurality of channels of single-mode pump light with the same optical power are independently adjusted by the VOA array 50, so that the pump light source can provide the plurality of channels of single-mode pump light with a same power adjustment range. In this way, the optical amplifier may randomly select an interface to connect to the pump light source, thereby simplifying a use process of the pump light source.

In some examples, the power leveler 60 is a star coupler or a multi-mode interferometer (multi-mode interferometer, MMI). The star coupler is a coupler having a plurality of input ends and a plurality of output ends, where each input end is connected to one input optical fiber, and each output end is connected to one output optical fiber. A function of the star coupler is to combine optical power inputted from these input optical fibers and evenly distribute the optical power to the output optical fibers.

In this embodiment of this application, the light emitting unit 10 is connected to the mode field converter 40 through an optical fiber, or an optical path is formed in a space alignment manner. The mode field converter 40 and the mode converter 20 are connected by an optical fiber, or an optical path is formed in a space alignment manner. A plurality of output ends of the mode converter 20 are connected to a plurality of input ends of the power leveler 60 one by one through a plurality of single-mode optical fibers. Each output end of the power leveler 60 is connected to an input end of a VOA in the VOA array 50 through a single-mode optical fiber. An output end of each VOA in the VOA array 50 is connected to the optical interface unit 30 through a single-mode optical fiber.

In some examples, the optical interface unit 30 includes a plurality of optical fiber interfaces, and each optical fiber interface is connected to an output end of one VOA in the VOA array 50. Alternatively, the optical interface unit 30 includes an optical backplane interface, and the optical backplane interface is connected to output ends of all VOAs in the VOA array 50.

In this embodiment of this application, various types of mode converters and mode field converters may be randomly combined. The following describes several combinations by using examples with reference to FIG. 4 to FIG. 10.

FIG. 4 is a schematic diagram of a structure of another pump light source according to an embodiment of this application. As shown in FIG. 4, the pump light source includes a light emitting unit 10, an optical fiber mode field converter 41, and an optical fiber type photonic lantern 21. The optical fiber mode field converter 41 is an implementation of the mode field converter 40 in FIG. 3, and the optical fiber type photonic lantern 21 is an implementation of the mode converter 20 in FIG. 3. An input end of the optical fiber mode field converter 41 is coupled to, for example, connected to or spatially aligned to, an output end of the light emitting unit 10. An output end of the optical fiber mode field converter 41 is coupled to, for example, connected to or spatially aligned to, an input end of the optical fiber type photonic lantern 21. Herein, the output end of the light emitting unit 10 is one end of a pigtail of the light emitting unit 10.

For example, the input end of the optical fiber mode field converter 41 is spliced with the output end of the light emitting unit 10, and the output end of the optical fiber mode field converter 41 is spliced with the input end of the optical fiber type photonic lantern 21. Low-loss connection between corresponding optical devices can be implemented in a splicing manner.

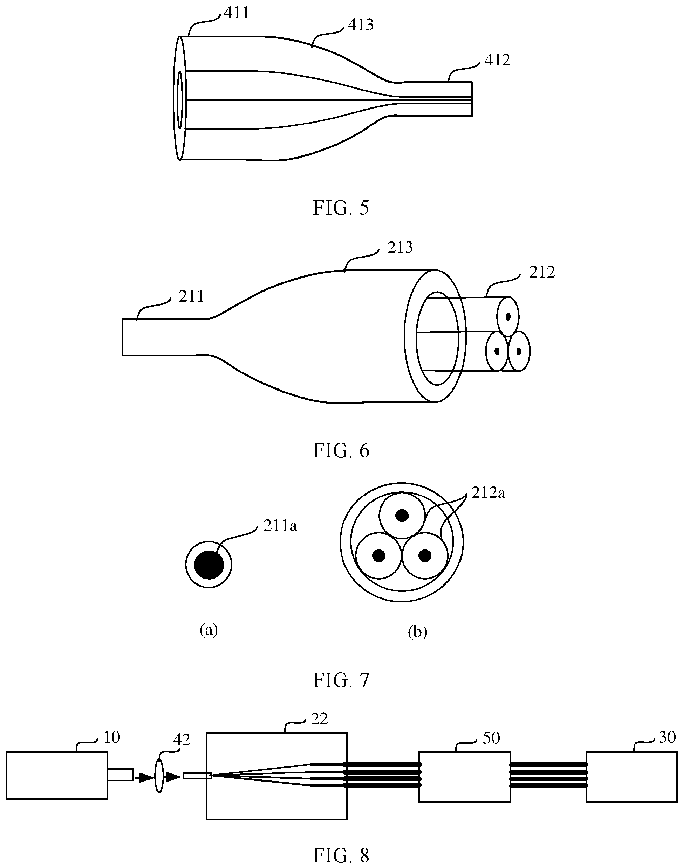

FIG. 5 is a schematic diagram of a structure of an optical fiber mode field converter according to an embodiment of this application. As shown in FIG. 5, the optical fiber mode field converter 41 includes an input end 411, an output end 412, and a tapered area 413 connected between the input end 411 and the output end 412. A diameter of the pigtail of the light emitting unit 10 is generally larger, and a diameter of an end face of the input end of the optical fiber type photonic lantern 21 is smaller. Therefore, in this embodiment of this application, a fiber core diameter of the input end 411 of the optical fiber mode field converter 41 is greater than or equal to a fiber core diameter of the output end 412 of the optical fiber mode field converter 41. An optical fiber mode field converter shown in FIG. 5 is formed through tapering by using a single multi-mode optical fiber.

In some other examples, the optical fiber mode field converter 41 is a double-clad optical fiber. The double-clad optical fiber includes a fiber core, a first cladding, and a second cladding. The first cladding and the second cladding are sequentially radially and outwardly wrapped on the fiber core. A refractive index of the fiber core is greater than a refractive index of the first cladding, and a refractive index of the first cladding is greater than a refractive index of the second cladding. A diameter of an end face of the fiber core matches (for example, is the same as) a diameter of an end face of the input end of the photon lantern 21, and a diameter of an end face the second cladding matches a diameter of an end face of the pigtail of the light emitting unit.

The optical fiber mode field converters of the two structures can implement mode field matching between the output end of the light emitting unit 10 and the input end of the mode converter 20.

Optical fiber type photonic lantern is a linear optical device with all-optical fiber structure, and is formed through tapering by using a plurality of single-mode optical fibers covered with a glass tube. A refractive index of the glass tube is less than a refractive index of the single-mode optical fiber. FIG. 6 is a schematic diagram of a structure of an optical fiber type photonic lantern according to an embodiment of this application. As shown in FIG. 6, the optical fiber type photonic lantern 21 includes an input end 211, an output end 212, and a tapered area 213 connected between the input end 211 and the output end 212. A diameter of the input end 211 of the optical fiber type photonic lantern 21 is less than a diameter of the output end 212 of the optical fiber type photonic lantern 21.

FIG. 7 is a schematic diagram of two end faces of the optical fiber type photonic lantern in FIG. 6. As shown in (a) in FIG. 7, the input end 211 of the optical fiber type photonic lantern 21 includes a multi-mode optical fiber 211a. The multi-mode optical fiber 211a uses a glass tube as a cladding layer, and uses fiber cores of the plurality of single-mode optical fibers after the tapering and the cladding layer as a fiber core. As shown in (b) in FIG. 7, the output end 212 of the optical fiber type photonic lantern 21 includes a plurality of single-mode optical fibers 212a, and each single-mode optical fiber 212a outputs one channel of single-mode pump light.

In multi-mode pump light outputted by the light emitting unit, pump light in a high-order mode has poor stability compared with pump light in a low-order mode. At an input end of an optical fiber mode field converter, the high-order mode is distributed in a fiber core and a cladding. In a process in which the multi-mode pump light is propagated along a direction from the input end to an output end of the optical fiber mode field converter, when a total reflection condition is not met or a boundary condition does not meet a stable electromagnetic oscillation, the pump light in the high-order mode cannot be bound by the fiber core, and therefore is leaked out from the cladding. Remaining pump light in the low-order mode with high stability is outputted to the optical fiber type photonic lantern, to improve stability of output power of the optical fiber type photonic lantern. In addition, an appropriate optical fiber mode field converter is selected based on a pigtail of the light emitting unit and a size of an end face of the input end of the photonic lantern, so that a light emitting unit with an end face of any size can be connected to a photonic lantern with an end face of any size. In addition, compared with space coupling requiring a precision optical platform and airtight packaging, a manner of connecting the pigtail of the light emitting unit to the input end of the optical fiber mode field converter and connecting the output end of the optical fiber mode field converter to the input end of the optical fiber type photonic lantern is simpler, and has lower assembly costs.

FIG. 8 is a schematic diagram of a structure of another pump light source according to an embodiment of this application. As shown in FIG. 8, compared with the pump light source shown in FIG. 4, a difference lies in that in FIG. 8, the mode field converter is a lens 42, the mode converter is a waveguide type photonic lantern 22, and the lens 42 is located on an optical path between an output end of a light emitting unit 10 and an input end of a mode converter 20. Herein, the lens 42 is a single lens or a lens group including a plurality of lenses. Mode field distribution of an optical signal at the output end of the light emitting unit can be changed by using the lens, and the mode field of the optical signal can be converted to match a size of an end face of the input end of the mode converter 20.

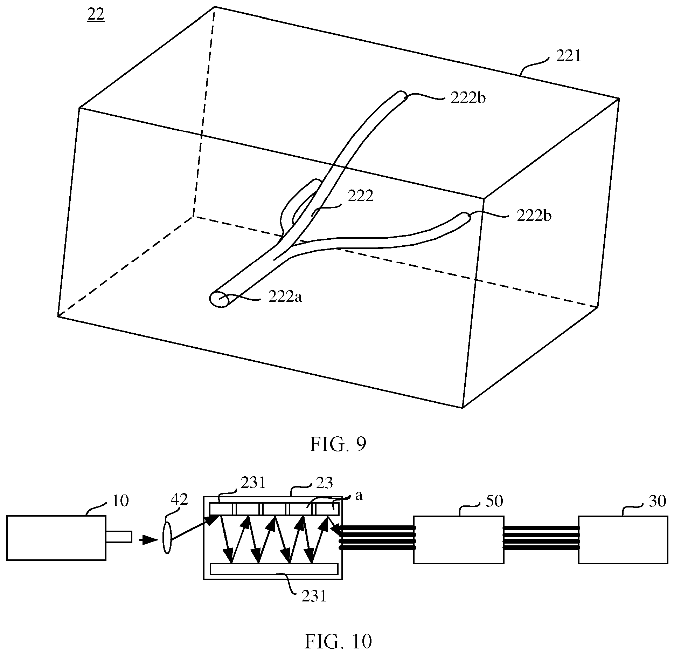

FIG. 9 is a schematic diagram of a structure of a waveguide type photonic lantern according to an embodiment of this application. As shown in FIG. 9, the waveguide type photonic lantern 22 includes a glass substrate 221 and a waveguide structure 222 located in the glass substrate. The waveguide structure includes a plurality of single-mode waveguides, and one ends of the plurality of single-mode waveguides are converged to form a multi-mode waveguide. The multi-mode waveguide is an input end 222a of the waveguide type photonic lantern. The other ends of the plurality of single-mode waveguides are spaced from each other, which are a plurality of output ends 222b of the waveguide type photonic lantern.

The waveguide structure is formed by using ultrafast (for example, femtosecond) laser engraving glass substrate. A high temperature brought by laser can change a refractive index of the glass at a position where the laser acts, thereby forming a waveguide in the glass. The foregoing waveguide structure may be obtained by designing a moving path of the laser.

In some examples, the glass substrate 221 is a silicate glass substrate or a phosphate glass substrate. It should be noted that a manufacturing material of the waveguide type photonic lantern is not limited in this embodiment of this application, provided that the waveguide type photonic lantern can be formed.

In some examples, the output end of the light emitting unit is an optical fiber collimator connected to the pigtail of the light emitting unit. The multi-mode pump light is collimated by the optical fiber collimator, to facilitate space alignment with other optical devices.

In this manner, pump light of all modes in the multi-mode pump light outputted by the light emitting unit enters the waveguide type photonic lantern, and total output power of the waveguide type photonic lantern is higher than total output power of the optical fiber type photonic lantern in the embodiment shown in FIG. 4. However, because the total output optical power of the waveguide type photonic lantern includes optical power of the single-mode pump light converted in the high-order mode, stability of the output optical power of the waveguide type photonic lantern deteriorates. In addition, an appropriate mode field converter is selected based on a size of the end face of the output end of the light emitting unit and a size of the end face of the input end of the waveguide type photonic lantern, so that a connection between any light emitting unit and a waveguide type photonic lantern with an end face of any size can be implemented.

FIG. 10 is a schematic diagram of a structure of another pump light source according to an embodiment of this application. A difference between the pump light source shown in FIG. 10 and the pump light source shown in FIG. 8 lies in that in FIG. 10, a mode converter is an MPLC 23.

As shown in FIG. 10, the MPLC 23 is a reflective MPLC. The reflective MPLC includes two reflectors 231 disposed opposite to each other, the multi-mode pump light is emitted after being reflected by the reflectors 231 for a plurality of times between the two reflectors 231, and at least one of the two reflectors 231 is a phase plate. Each time the multi-mode pump light is reflected on the phase plate, phase modulation is performed once. After a plurality of times of phase modulation, a space mode of the multi-mode pump light changes, and a plurality of channels of single-mode pump light are obtained.

In the embodiment shown in FIG. 10, one of the two reflectors 231 is a phase plate (the upper reflector 231 in FIG. 10), and the other of the two reflectors 231 is a reflector (for example, the lower reflector 231 in FIG. 10). Alternatively, in another embodiment, both reflectors are phase plates.

For example, in FIG. 10, the phase plate has a plurality of phase modulation areas arranged at intervals along a propagation direction of the multi-mode pump light. When the multi-mode pump light is reflected in different phase modulation areas a, generated phase change values are different.

It should be noted that one phase plate in FIG. 10 may alternatively be replaced with a plurality of split phase plates, and each phase plate corresponds to one phase modulation area. When the multi-mode pump light is reflected by different phase plates, the generated phase change values are different.

The multi-mode pump light is irradiated on a reflective surface of the phase plate at a specific angle, and the angle enables the multi-mode pump light to be emitted from the MPLC 23 after being reflected between the phase plate and the reflector for a plurality of times.

In some examples, the phase plate includes a plurality of electromagnetic resonance units. One electromagnetic resonance unit corresponds to one phase modulation area. For example, the phase plate includes a metal substrate, a dielectric layer, and an array layer. The dielectric layer and the array layer are sequentially stacked on the metal substrate. The array layer includes a plurality of metal blocks arranged in an array. Each metal block and a dielectric layer and a metal substrate at a corresponding position of the metal block form an electromagnetic resonance unit. When the multi-mode pump light is incident to the electromagnetism resonance unit, the corresponding electroresonance and magnetic resonance are excited, thereby generating a phase change.

For example, the metal substrate is an aluminum substrate, the dielectric layer is a silicon oxide layer, and the metal block is a gold block, a silver block, an aluminum block, or the like. A structure of the phase plate is not limited in this application, provided that a phase of the pump light can be modulated in a process of transmitting the pump light.

In some other examples, the phase plate is replaced with a liquid crystal-based spatial light modulator.

Two reflectors 231 that are disposed oppositely may be disposed in the reflective MPLC. The reflective MPLC has a small quantity of structures and a small size. This is beneficial to reduce a volume of the pump light source.

In some other embodiments, the MPLC 23 in FIG. 10 is replaced with a transmissive MPLC.

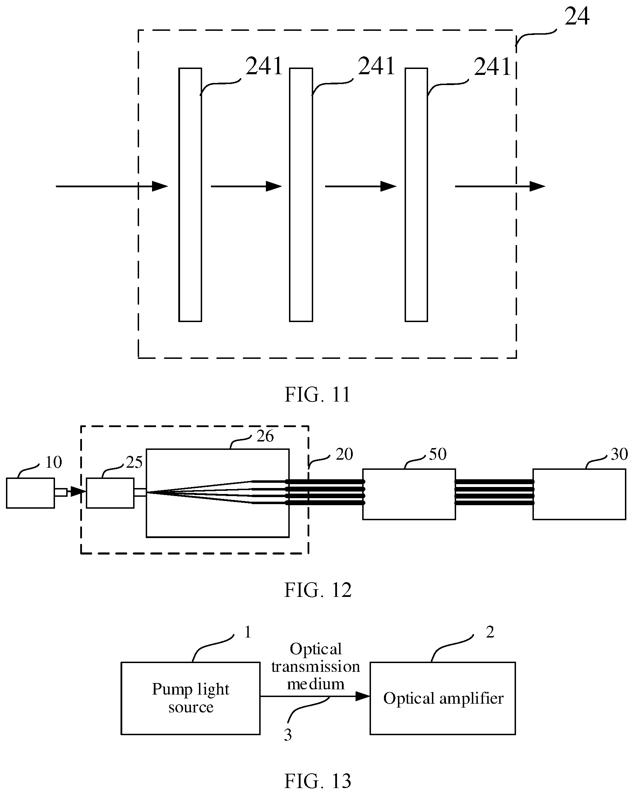

FIG. 11 is a schematic diagram of a structure of a transmissive MPLC according to an embodiment of this application. As shown in FIG. 11, the transmissive MPLC 24 includes a plurality of phase plates 241 arranged in parallel. The multi-mode pump light sequentially passes through the plurality of phase plates 241, and phase modulation is performed once each time the multi-mode pump light passes through one phase plate 241, to perform mode conversion on the multi-mode pump light.

In the transmissive MPLC 24, the phase plate 241 is a layer structure with thickness less than a wavelength of the multi-mode pump light. When the multi-mode pump light passes through the phase plates 241, the phase changes. After a plurality of times of phase changes of the plurality of phase plates 241, a space mode of the multi-mode pump light changes, and a plurality of channels of single-mode pump light are obtained.

In some examples, the phase plate 241 includes a transparent substrate and a plurality of electromagnetic resonance units. The plurality of electromagnetic resonance units are arranged on one side of the transparent substrate in an array. For example, the electromagnetic resonance unit is of a cylindrical structure, a prism structure, or the like, and an axis of the cylindrical structure or the prism structure is perpendicular to a side surface on which the cylindrical structure or the prism structure is located. The electromagnetic resonance unit is formed by a dielectric material with a large refractive index, for example, a dielectric material with a refractive index greater than 2. For example, the substrate is a silicon dioxide substrate, and the electromagnetic resonance unit is a silicon nanostructure.

A shape and a size of each electromagnetic resonance unit correspond to phase change values before and after phase modulation is performed on light by the electromagnetic resonance unit. A size of a corresponding electromagnetic resonance unit is designed based on a phase change value needed by the light, to implement corresponding phase modulation.

In some other examples, the phase plates 241 are replaced with a liquid crystal-based spatial light modulator.

In the embodiments shown in FIG. 10 and FIG. 11, pump light of all modes in the multi-mode pump light outputted by the light emitting unit enters the MPLC. In the MPLC, some modes (such as the low-order mode) can be converted to a basic mode, but the high-order mode cannot be converted to the basic mode. Therefore, stability of the output optical power of the MPLC is high. In addition, an appropriate mode field converter is selected based on the size of the end face of the output end of the light emitting unit and a size of an end face of an input end of an MPLC, so that a light emitting unit with an end face of any size can be connected to an MPLC with an end face of any size.

In this embodiment of this application, selection of a mode in which the MPLC can be converted into the basic mode is implemented by designing a shape, a structure, and a size of the electromagnetic resonance unit. Different electromagnetic resonance units can generate phase modulation for pump light in a corresponding mode, to convert the pump light in the mode into the basic mode for outputting.

FIG. 12 is a schematic diagram of a structure of another pump light source according to an embodiment of this application. As shown in FIG. 12, the pump light source includes a light emitting unit 10, a mode converter 20, and an optical interface unit 30. For structures of the light emitting unit 10 and the optical interface unit 30, refer to related descriptions in FIG. 1. Details are not described herein again. The mode converter 20 includes an optical fiber laser 25 and an optical splitter 26. The optical fiber laser 25 is configured to convert the multi-mode pump light outputted by the light emitting unit into one channel of single-mode pump light. The optical splitter 26 is configured to split the single-mode pump light outputted by the optical fiber laser into a plurality of channels of single-mode pump light.

For example, the optical splitter 26 splits the single-mode pump light outputted by the optical fiber laser 25 into a plurality of channels of single-mode pump light with equal power. In this embodiment, because the plurality of channels of single-mode pump light are obtained by the optical splitter 26, optical power of each channel of single-mode pump light is equal. Therefore, a power leveler does not need to be disposed, and a composition structure of the pump light source is simplified.

The optical fiber laser 25 includes a pump source, a gain optical fiber, and a resonant cavity. The multi-mode pump light provided by the pump source is absorbed after entering the gain optical fiber, so that a quantity of energy-level particles in the gain fiber is reversed. Laser oscillation is formed under an action of the resonant cavity, and single-mode pump light is generated for outputting. In this embodiment, the light emitting unit 10 is a pump source of the optical fiber laser 25, and is configured to provide energy for the fiber laser 25.

For example, the gain optical fiber is a glass optical fiber doped with a rare earth element, a plastic optical fiber doped with a laser dye, or the like. The resonant cavity is a Fabry-Perot (Fabry-Perot, F-P) resonant cavity, an annular cavity, or the like. A structure of the optical fiber laser is not limited in this application, provided that a light emitting unit can be used as a pump source to output single-mode pump light.

In this embodiment, a wavelength of the multi-mode pump light outputted by the light emitting unit 10 is different from a wavelength of the single-mode pump light outputted by the fiber laser 25. For example, the wavelength of the multi-mode pump light outputted by the light emitting unit 10 is 915 nm, and the wavelength of the single-mode pump light outputted by the optical fiber laser 25 is 980 nm.

The pump light source further includes a VOA array 50. For related content of the VOA array, refer to the embodiment shown in FIG. 2, and detailed descriptions are omitted herein.

In some examples, the pump light source further includes a mode field converter, and the mode field converter is located between the light emitting unit 10 and the mode converter 20.

FIG. 13 is a schematic diagram of a structure of an optical amplification system according to an embodiment of this application. As shown in FIG. 13, the optical amplification system includes: a pump light source 1, an optical amplifier 2, and an optical transmission medium 3. The pump light source 1 is any one of the foregoing pump light sources, the optical amplifier 2 is formed by a plurality of passive components, and the optical transmission medium 3 is configured to transmit, to the optical amplifier 2, single-mode pump light outputted by the pump light source.

In some examples, a plurality of passive components form at least one stage of amplification optical path. That is, the optical amplifier can amplify received signal light for one or more times, and a quantity of times of amplifying the signal light is the same as a quantity of stages of the amplification optical path. A quantity of stages of amplification optical paths in the optical amplifier is disposed based on an actual requirement. This is not limited in this embodiment of this application.

In this embodiment of this application, each stage of amplification optical path includes a wavelength division multiplexer and an optical fiber. The wavelength division multiplexer is configured to combine received signal light and received single-mode pump light into one channel and output the channel to the optical fiber. The optical fiber is configured to: amplify corresponding signal light by using the received single-mode pump light, and output signal light after the amplification.

Types of the wavelength division multiplexer are not limited in this embodiment of this application, and include but are not limited to a directional coupler, a dichromic mirror, and the like.

In some examples, the optical fiber is an EDF or an EYDF. In this embodiment of this application, an amplifier using the EDF as the optical fiber is also referred to as an EDFA, and an amplifier using the EYDF as the optical fiber is also referred to as an EYDFA.

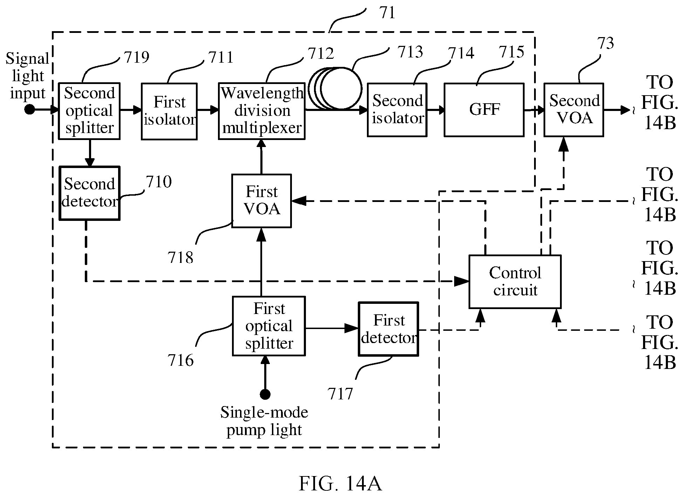

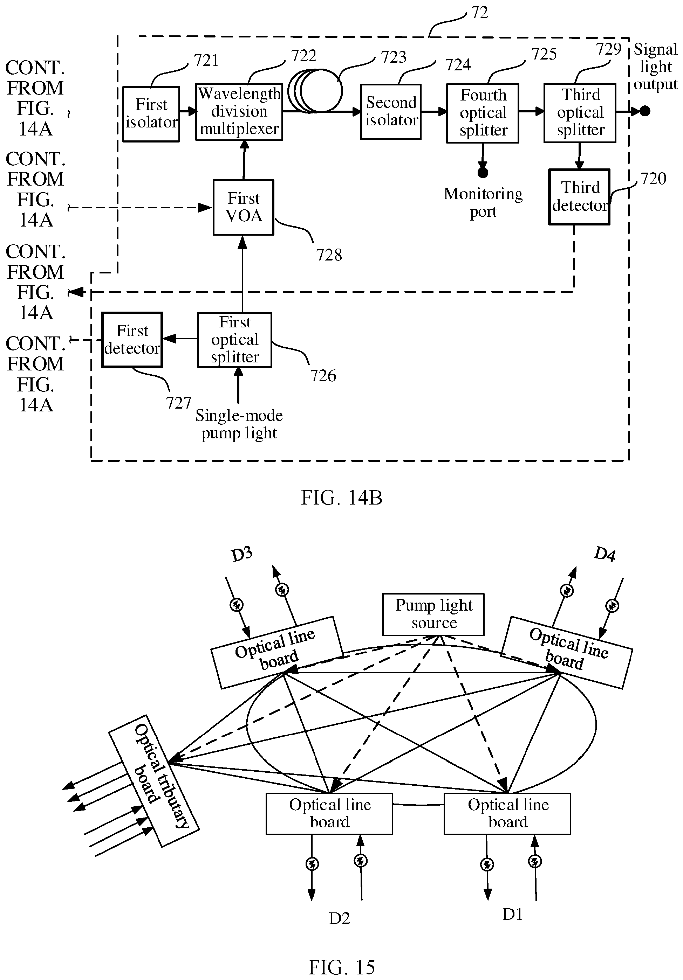

FIG. 14A and FIG. 14B are a schematic diagram of a structure of another optical amplifier according to an embodiment of this application. As shown in FIG. 14A and FIG. 14B, the optical amplifier 2 includes two stages of amplification optical paths: a second splitter 71 and a second-stage amplification optical path 72.

The first-stage amplification optical path 71 includes a first isolator 711, a wavelength division multiplexer 712, an optical fiber 713, a second isolator 714, and a GFF 715. The first isolator 711 is configured to: output signal light received from outside the optical amplifier 2 to the wavelength division multiplexer 712, and block light from the wavelength division multiplexer 712. The wavelength division multiplexer 712 is configured to combine the received signal light and the received single-mode pump light into one channel and output the channel to the optical fiber 713. The optical fiber 713 is configured to: amplify corresponding signal light by using the received single-mode pump light, and output signal light after the amplification. The second isolator 714 is configured to: transmit the signal light after the amplification outputted by a corresponding optical fiber to the GFF 715, and block light from the GFF 715.

By using the first isolator and the second isolator, noise figure degradation caused by consumption of pump optical power because of reflection of ASE noise to the optical fiber can be avoided, and self-excitation can also be avoided in the optical fiber. In addition, flatness decreases each time the signal light passes through the amplification optical path. If the flatness decreases to a specific extent, the communication cannot be normally performed. Therefore, flatness of the signal light after the amplification outputted by the corresponding amplification optical path needs to be improved by using the GFF, to support multi-stage amplification of the signal light.

To facilitate adjustment of a gain of the first-stage amplification optical path, the first-stage amplification optical path further includes: a first splitter 716, a first detector 717, and a first VOA 718. The first splitter 716 is configured to split the received single-mode pump light provided by the pump light source into a first part of the single-mode pump light and a second part of the single-mode pump light. The first detector 717 is configured to detect optical power of the first part of the single-mode pump light to obtain a first power value. The first VOA 718 is configured to: adjust optical power of the received second part of the single-mode pump light based on the first power value, and output the second part of adjusted single-mode pump light to a first wavelength division multiplexer.

The first splitter 716 splits the received single-mode pump light based on a set split ratio. Based on the set split ratio, optical power of the single-mode pump light received by the first-stage amplification optical path and optical power of the second part of the single-mode pump light can be calculated based on the first power value. It can be seen that the detected optical power of the first part of single-mode pump light can reflect optical power of the single-mode pump light received by the first-stage amplification optical path and the optical power of the second part of the single-mode pump light. By adjusting a first VOA 718 based on the first power value, the optical power of the second part of the single-mode pump light coupled to the optical fiber can be adjusted, so that the gain of the first-stage amplification optical path is adjusted.

For example, the split ratio is set to 1:99 or 5:95. Correspondingly, a ratio of the optical power of the first part of the single-mode pump light to the optical power of the second part of the single-mode pump light is 1:99 or 5:95.

A structure of the second amplification optical path is basically the same as a structure of the first amplification optical path, and includes a first isolator 721, a wavelength division multiplexer 722, an optical fiber 723, a second isolator 724, a first splitter 726, a first detector 727, and a first VOA 728. For a relationship between these optical devices in the second-stage amplification optical path, refer to related content of the first-stage amplification optical path, and details are not described herein again.

In some examples, the optical amplifier further includes a second VOA 73. The second VOA 73 is located between the first-stage amplification optical path 71 and the second-stage amplification optical path 72, and is configured to: adjust the optical power of the signal light outputted by the first-stage amplification optical path, and output adjusted light to the second-stage amplification optical path. By disposing the second VOA 73, the output optical power of the optical amplifier can be conveniently adjusted.

In some examples, the first-stage amplification optical path 71 further includes a second splitter 719 and a second detector 710. The second splitter 719 is configured to split the signal light received from outside the optical amplification system into the first part of the signal light and the second part of the signal light. The second detector 710 is configured to detect optical power of the first part of signal light to obtain a second power value. The second-stage amplification optical path 72 further includes a third splitter 729 and a third detector 720. The third splitter 729 is configured to split received signal light into a third part of signal light and a fourth part of signal light, and output the third part of signal light. The third detector 720 is configured to detect the optical power of the fourth part of signal light to obtain a third power value. The second VOA 73 is configured to adjust optical power of the received second part of signal light based on the second power value and the third power value and output the received second part of signal light to the second-stage amplification optical path 72.

The optical amplifier detects optical power of signal light inputted to the optical amplifier by the second splitter and the second detector, detects optical power of signal light outputted by the optical amplifier by the third splitter and the third detector, and adjusts the second VOA based on the optical power of the signal light inputted to the optical amplifier and the optical power of the signal light outputted by the optical amplifier, to adjust output optical power of the optical amplifier to target optical power.

In some examples, the optical amplifier further includes a control circuit. The control circuit is configured to: adjust a corresponding first VOA based on the first power value, and/or adjust a corresponding second VOA based on the second power value and the third power value.

In some examples, to monitor a working status of the optical amplifier in real time, the optical amplifier further includes a fourth optical splitter 725. The fourth optical splitter is located at an output end of a last-stage of amplification optical path, and is configured to separate one channel of signal light from the signal light outputted by the optical amplifier and send the channel of signal light to a monitoring port, to monitor the signal light outputted by the optical amplifier.

In some examples, the single-mode pump light inputted to each of the first-stage amplification optical path 71 and the second-stage amplification optical path 72 is one channel of single-mode pump light outputted by the pump light source.

In some other examples, the single-mode pump light inputted to the first-stage amplification optical path 71 and the second-stage amplification optical path 72 is obtained by splitting one channel of single-mode pump light outputted by the pump light source. In this case, the optical amplifier further includes a fifth optical splitter. The fifth optical splitter is configured to: split one channel of single-mode pump light outputted by the pump light source into two channels, and then output the two channels to the first-stage amplification optical path and the second-stage amplification optical path respectively. For example, a split ratio of the fifth optical splitter is 1:1.

It should be noted that, in another embodiment, there are more than two stages, for example, three stages, of amplification optical paths in the optical amplifier. At least one stage of amplification optical path is disposed between the first-stage amplification optical path 71 and the second-stage amplification optical path 72, and a structure of any stage of amplification optical path between the first-stage amplification optical path 71 and the second-stage amplification optical path 72 may be the same as the structure of the first-stage amplification optical path 71, or some optical devices thereof may be removed as required.

In the optical amplification system provided in this embodiment of this application, the pump light source can provide single-mode pump light for a plurality of optical amplifiers. Therefore, the optical amplification system can be applied to an optical communication device including a plurality of optical amplifiers.

In some examples, the pump light source provides one channel of single-mode pump light for each optical amplifier, and the single-mode pump light needed by each stage of the optical amplifier is generated by the channel of single-mode pump light. In some other examples, the pump light source provides two channels of single-mode pump light that serve as a backup for each other for each optical amplifier. In still some other examples, the pump light source provides one channel of single-mode pump light for each stage of amplification optical path of the optical amplifier.

In embodiments of this application, the optical communication device includes but is not limited to a ROADM, an optical transceiver station (also referred to as an optical terminal station), a central station (also referred to as a central office (central office, CO)) in a passive optical network (passive optical network, PON), a metropolitan area network aggregation station, and the like. The following uses the ROADM as an example to describe a case in which the pump light source provides single-mode pump light for a plurality of optical amplifiers.

FIG. 15 is a schematic diagram of a structure of a ROADM according to an embodiment of this application. As shown in FIG. 15, the ROADM includes a wavelength grooming unit, an optical interconnection unit, and a wavelength add/drop unit.

For example, the ROADM has four dimensions. For example, as shown in FIG. 15, four dimensions are D1 to D4, and each dimension corresponds to one wavelength grooming unit. In this application, a dimension is also referred to as a line direction. Each wavelength grooming unit is configured to be connected to another network element in the optical communication system, for example, connected to another ROADM. The wavelength grooming unit is configured to: receive signal light sent by the network element in a first line direction, and then send signal light of a target wavelength combination in the signal light sent by the network element in the first line direction to the wavelength grooming unit corresponding to the network element in a second line direction.

In some examples, when local wavelength adding/dropping is needed, the wavelength grooming unit is further configured to: output signal light of a part of a wavelength in the signal light sent by the network element in the first line direction to the wavelength add/drop unit, to drop the signal light of the part of the wavelength, where this process is also referred to as wavelength dropping; and/or, receive the signal light outputted by the wavelength add/drop unit, combine the signal light received from the wavelength add/drop unit with the signal light of the target wavelength combination, and send signal light after the combination to the network element in the second line direction, to add the signal light outputted by the wavelength add/drop unit to a path, where this process is also referred to as wavelength adding.

An optical interconnection unit is connected to all wavelength grooming units and the wavelength add/drop unit, and is configured to implement full interconnection of optical channels between the wavelength grooming units and the wavelength add/drop units. When optical channels are fully interconnected, for any two wavelength grooming units, the optical interconnection unit can provide at least one optical channel to connect the two wavelength grooming units, so that bidirectional transmission of signal light can be performed between the two wavelength grooming units. In addition, for the wavelength add/drop units and any wavelength grooming unit, the optical interconnection unit also provides at least one optical channel to connect the wavelength add/drop units and the wavelength grooming unit, so that bidirectional transmission of signal light can be performed between the wavelength add/drop units and the wavelength grooming unit. In some examples, the optical interconnection unit includes an optical fiber or an optical backplane.

For example, the wavelength add/drop unit is configured to: drop signal light received by the optical interconnection unit from the wavelength grooming unit, and then output the dropped light to a transceiver OTU, and/or output the dropped light to a relay OTU for relaying and then add the light for forwarding again. The wavelength add/drop unit is further configured to send locally added wavelength signal light to the wavelength grooming unit in a target line direction.

Generally, each wavelength grooming unit of the ROADM corresponds to an optical line board, and each wavelength add/drop unit corresponds to an optical tributary board. The foregoing optical amplifier is disposed on each optical line board and the optical tributary board.

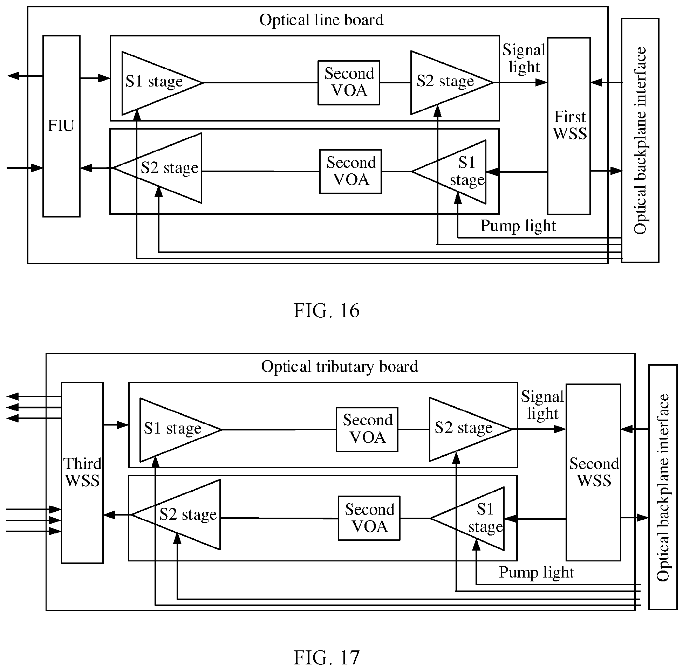

FIG. 16 is a schematic diagram of a structure of an optical line board in FIG. 15. As shown in FIG. 16, a multiplexing/demultiplexing unit includes a first wavelength selective switch (wavelength selective switch, WSS), a fiber interface unit (fiber interface unit, FIU), and two optical amplifiers. The first WSS is configured to: multiplex light received by the optical interconnection unit from the wavelength grooming units, and then output light after the multiplexing to the FIU. The FIU outputs the signal light received from the first WSS to a long fiber, to transmit the optical signal to another network element. The FIU is further configured to: receive signal light that is transmitted by another network element through the long fiber, and output the FIU to the first WSS. The first WSS is further configured to: demultiplex the signal light received from the FIU, and transmit signal light after the demultiplexing to a corresponding multiplexing/demultiplexing unit or a wavelength add/drop unit by using the optical interconnection unit.

The two optical amplifiers are connected between the first WSS and the FIU. One optical amplifier is configured to amplify the signal light outputted by the first WSS to the FIU, and the other optical amplifier is configured to amplify the signal light outputted by the FIU to the first WSS.

FIG. 17 is a schematic diagram of a structure of an optical tributary board in FIG. 15. As shown in FIG. 17, the wavelength add/drop unit includes a second WSS, a third WSS, and two optical amplifiers.

The second WSS is configured to: multiplex light received by the optical interconnection unit from the wavelength grooming units, and then output the light after the multiplexing to the third WSS. The third WSS demultiplexes received light, and transfers light of different wavelengths to required output ports of the third WSS based on a configuration, to complete wavelength dropping. The light of different wavelengths is transferred to corresponding output ports, so that the light of different wavelengths undergoes different subsequent processing. For example, the light is received by the transceiver OTU to complete optical routing, and/or the light is relayed by the relay OTU and then added for forwarding again.

The third WSS performs multiplexing processing on light of different wavelengths received from a plurality of input ports of the third WSS, and then outputs light after the multiplexing to the second WSS. The second WSS demultiplexes the received light, and then transfers the light to different output ports, and sends the light to each wavelength grooming unit by the optical interconnection unit, to complete wavelength adding.

The two optical amplifiers are both connected between the second WSS and the third WSS. One optical amplifier is configured to amplify the signal light outputted by the second WSS to the third WSS, and the other optical amplifier is configured to amplify the signal light outputted by the third WSS to the second WSS.

In this embodiment of this application, the WSS includes but is not limited to a WSS based on a planar lightwave circuit (planar lightwave circuit, PLC) technology, a WSS based on a micro-electro-mechanical system (micro-electro-mechanical system, MEMS), a WSS based on liquid crystal, and the like. It should be noted that, in addition to the WSS, another optical device or apparatus that can transfer light of any wavelength combination from any input port to any output port may be used.

It should be noted that, in some other examples, a plurality of optical amplifiers in the ROADM are separately located on one or more boards, and the WSS is located on another board.

As shown in FIG. 15, the ROADM further includes a pump light source. The pump light source is any one of the foregoing pump light sources. The pump light source is connected to the optical amplifier via an optical transmission medium.

As shown in FIG. 15, the optical transmission medium is an optical backplane. The optical backplane includes a plurality of pump optical channels (also referred to as single-mode optical fibers). As shown by dashed arrows in FIG. 15, each pump optical channel is configured to transmit single-mode pump light. In an embodiment of this application, parameters such as a size and a numerical aperture of a fiber core and a cladding of each pump optical channel are designed, so that each pump optical channel can support transmission of single-mode pump light of 980 nm.

The optical backplane further includes one input interface and a plurality of output interfaces. The input interface is used to interconnect with the optical interface unit of a pump unit, and the output interface is used to interconnect with the optical interface on the optical line board. A pump optical channel exists between the input interface and each output interface.

For example, the optical backplane is integrated on a rack of the optical communication device. The output interface of the optical backplane is connected to some or all slots on the rack to provide single-mode pump light for boards in the corresponding slots. An output interface connected to each slot is disposed based on a requirement of a board connected to the slot. For example, when the board connected to the slot is the foregoing optical line board, a quantity of optical amplifiers on the optical line board is 2, and the amplification optical path of each optical amplifier has two stages, the slot needs to be connected to two output interfaces or four output interfaces.

Because power of the single-mode pump light is high, the optical transmission medium needs to meet a transmission requirement of the single-mode pump light. For example, a maximum power of 30 dBm is supported.

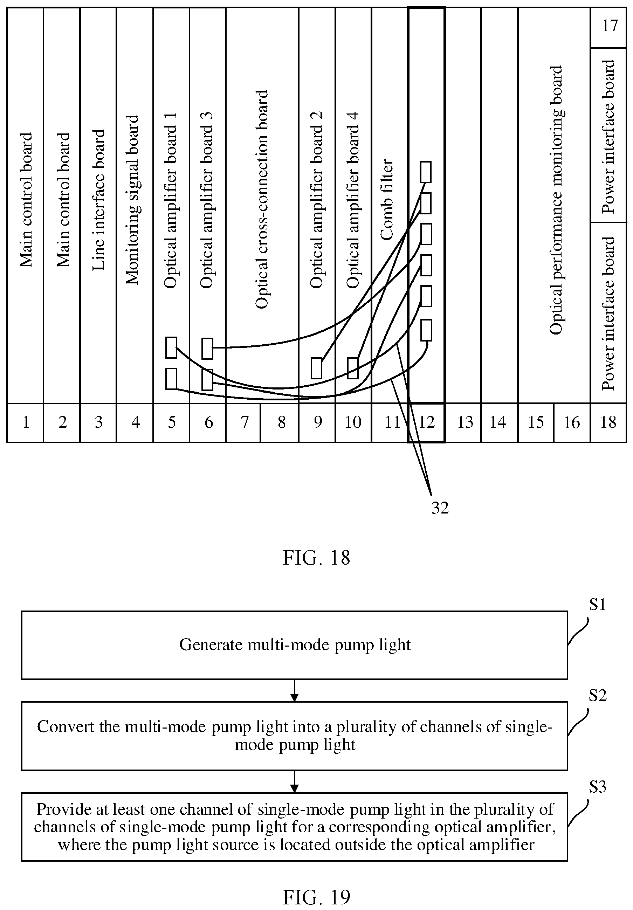

In some other examples, as shown in FIG. 18, the optical transmission medium is an optical fiber jumper 32. Both ends of the fiber jumper 32 have connector plugs, to be connected to the optical interface unit of the pump light source and connected to the optical interface on an optical amplifier board (or the optical line board).

In this embodiment of this application, a type of the ROADM includes but is not limited to a colorless-ROADM (colorless-ROADM, C-ROADM) (also referred to as a wavelength-irrelevant ROADM), a colorless&directionless-ROADM (colorless&directionless-ROADM, CD-ROADM) (also referred to as a wavelength-irrelevant direction-irrelevant ROADM), and a colorless&directionless&contentionless-ROADM (colorless&directionless&contentionless-ROADM, CDC-ROADM) (also referred to as a wavelength-irrelevant direction-irrelevant contention-irrelevant ROADM). Wavelength-irrelevant means that there is no fixed correspondence between an output port of a local wavelength add/drop unit and a wavelength; direction-irrelevant means that light received from any line direction can be sent to any line direction; and contention-irrelevant means that no wavelength conflict exists between dropped wavelengths when directions are irrelevant.

This application further provides a method for providing pump light. The pump light is provided by a pump light source. As shown in FIG. 19, the method for providing pump light includes the following steps.

S1: Generate multi-mode pump light.

S2: Convert the multi-mode pump light into a plurality of channels of single-mode pump light.

S3: Provide at least one channel of single-mode pump light in the plurality of channels of single-mode pump light for a corresponding optical amplifier, where the pump light source is located outside the optical amplifier.

The method imposes no limitation on a structure of the pump light source. For example, the pump light source is any pump light source in the foregoing embodiments.

In some examples, the pump light source includes at least two multi-mode pump lasers and a power beam combiner, and the generating multi-mode pump light includes: outputting one channel of multi-mode pump light by at least two multi-mode pump lasers at same optical power; and combining the at least two channels of multi-mode pump light outputted by the at least two multi-mode pump lasers into one channel of multi-mode pump light by using the power beam combiner.

In a possible implementation, when some multi-mode pump lasers malfunction and cannot emit light, the method further includes: increasing output optical power of a multi-mode pump laser that does not malfunction, so that the optical power of multi-mode pump light outputted by the power beam combiner remains unchanged.

In some examples, a quantity of channels of single-mode pump light needed by the optical amplifier is less than a maximum quantity of channels of multi-mode pump light that can be provided by the pump light source. In this case, the providing at least one channel of single-mode pump light in the plurality of channels of single-mode pump light for a corresponding optical amplifier by a pump light source includes: determining target single-mode pump light corresponding to a target optical amplifier from the plurality of channels of single-mode pump light; and adjusting optical power of the target single-mode pump light based on a requirement of output power of the target optical amplifier, to provide adjusted target single-mode pump light for the target optical amplifier.

In some examples, the method further includes: blocking idle single-mode pump light with no corresponding optical amplifier, so that the idle single-mode pump light is not outputted from the pump light source. By blocking the idle single-mode pump light, leakage of the idle single-mode pump light, which may cause damage to human eyes, can be avoided.

In some examples, the method further includes the following steps. In a first step, after adjusted target single-mode pump light is provided for the target optical amplifier, detect optical power of the target single-mode pump light received by the target optical amplifier. In a second step, adjust, inside the target optical amplifier based on the detected optical power of the target single-mode pump light, the optical power of the target single-mode pump light.

For example, in the first step, the optical power of the target single-mode pump light received by the target optical amplifier is detected by using an optical splitter and an optical detector. In the second step, the optical power of the target single-mode pump light is adjusted by using a VOA inside the target optical amplifier.

For example, in the second step, when the detected optical power of the target single-mode pump light is less than a threshold, the optical power of the target single-mode pump light is increased by adjusting a VOA corresponding to the target optical power; or when the detected optical power of the target single-mode pump light is greater than the threshold, the optical power of the target single-mode pump light is decreased by adjusting the VOA corresponding to the target optical power, thereby implementing automatic gain control of the optical amplifier.

The foregoing descriptions are merely embodiments of this application, but are not intended to limit this application.

## Claims

1. A pump light source, comprising:
a light emitting unit (10), configured to output multi-mode pump light;
a mode converter (20), configured to: convert the multi-mode pump light outputted by the light emitting unit (10) into a plurality of channels of single-mode pump light, and output the plurality of channels of single-mode pump light; and
an optical interface unit (30), configured to be connected to an optical amplifier via an optical transmission medium, to provide at least one channel of single-mode pump light in the plurality of channels of single-mode pump light for a corresponding optical amplifier via the optical transmission medium, wherein the pump light source is located outside the optical amplifier,
wherein the pump light source is **characterised in** further comprising:
a power leveler (60), configured to mix the optical power of the plurality of channels of single-mode pump light received from the mode converter (20) and then perform average allocation on mixed optical power, so that the optical power of the outputted plurality of channels of single-mode pump light is the same.

2. The pump light source according to claim 1, wherein the pump light source further comprises:
a mode field converter (40), configured to perform mode field matching between an output end of the light emitting unit (10) and an input end of the mode converter (20).

3. The pump light source according to claim 2, wherein the mode converter (20) is an optical fiber type photonic lantern; and
the mode field converter (40) is an optical fiber mode field converter, an input end of the optical fiber mode field converter is coupled to the output end of the light emitting unit (10), and an output end of the optical fiber mode field converter is coupled to an input end of the optical fiber type photonic lantern.

4. The pump light source according to claim 2, wherein the mode converter (20) is a waveguide type photonic lantern or a multi-plane optical converter; and
the mode field converter (40) comprises a lens, wherein the lens is located on an optical path between the output end of the light emitting unit (10) and the mode converter (20).

5. The pump light source according to claim 1 or 2, wherein the mode converter (20) comprises:
a fiber laser, configured to convert the multi-mode pump light outputted by the light emitting unit (10) into one channel of single-mode pump light, wherein the fiber laser uses the light emitting unit (10) as a pump source; and
an optical splitter, configured to split the single-mode pump light outputted by the fiber laser into the plurality of channels of single-mode pump light.

6. The pump light source according to any one of claims 1 to 5, wherein the pump light source further comprises:
a variable optical attenuator array (50), configured to control optical power of the plurality of channels of single-mode pump light.

7. The pump light source according to any one of claims 1 to 6, wherein the optical interface unit (30) comprises an optical fiber interface or an optical backplane interface.

8. The pump light source according to any one of claims 1 to 7, wherein the light emitting unit (10) comprises:
at least two multi-mode pump lasers (11), each configured to output one channel of multi-mode pump light; and
a power beam combiner (12), configured to: combine at least two channels of multi-mode pump light outputted by the at least two multi-mode pump lasers (11) into one channel of multi-mode pump light, and output the one channel of multi-mode pump light to the mode converter (20).

9. An optical amplification system, comprising:
a pump light source (1), an optical amplifier (2), and an optical transmission medium (3), wherein the pump light source (1) is the pump light source according to any one of claims 1 to 8, and the optical transmission medium is configured to transmit, to the optical amplifier (2), at least one channel of single-mode pump light outputted by the pump light source (1).

10. The optical amplification system according to claim 9, wherein the optical amplifier (2) comprises at least one stage of amplification optical path, and any stage of amplification optical path comprises a wavelength division multiplexer and an optical fiber;
the wavelength division multiplexer is configured to combine received signal light and received single-mode pump light into one channel and output the channel to the optical fiber; and
the optical fiber is configured to: amplify the signal light by using the received single-mode pump light, and output signal light after the amplification.

11. The optical amplification system according to claim 10, wherein the any stage of amplification optical path further comprises:
a first splitter (716), configured to split the received single-mode pump light provided by the pump light source (1) into a first part of single-mode pump light and a second part of single-mode pump light;
a first detector (717), configured to detect optical power of the first part of single-mode pump light to obtain a first power value; and
a first variable optical attenuator (718), configured to: adjust optical power of the received second part of single-mode pump light based on the first power value, and output the second part of adjusted single-mode pump light to the wavelength division multiplexer.

12. The optical amplification system according to claim 10 or 11, wherein the optical amplifier (2) further comprises: a second variable optical attenuator, located between two adjacent stages of amplification optical paths, and configured to: adjust optical power of signal light outputted by a previous-stage amplification optical path, and output adjusted signal light to a next-stage amplification optical path.

13. The optical amplification system according to claim 12, wherein
a first-stage amplification optical path (71) in the at least one stage of amplification optical path further comprises:
a second splitter (719), configured to split received signal light into a first part of signal light and a second part of signal light;
a second detector (710), configured to detect optical power of the first part of signal light to obtain a second power value;
a last-stage of amplification optical path in the at least one stage of amplification optical path further comprises:
a third splitter (729), configured to split received signal light into a third part of signal light and a fourth part of signal light, and output the third part of signal light; and
a third detector (720), configured to detect optical power of the fourth part of signal light to obtain a third power value, wherein
the second variable optical attenuator is configured to: adjust, based on the second power value and the third power value, optical power of the received signal light outputted by the previous-stage amplification optical path, and output the second part of adjusted signal light to the next-stage amplification optical path.

14. A reconfigurable optical add-drop multiplexer, comprising a plurality of boards and the optical amplification system according to any one of claims 9 to 13, wherein the optical amplifier (2) is integrated onto one or more boards, and the pump light source (1) and the optical amplifier (2) are located on separate boards.

## Patentansprüche

1. Pumplichtquelle, umfassend:
eine Leuchteinheit (10), die dazu konfiguriert ist, Multimodus-Pumplicht auszugeben;
einen Moduswandler (20), der zu Folgendem konfiguriert ist:
Umwandeln des Multimodus-Pumplichts, das durch die Leuchteinheit (10) ausgegeben wird, in eine Vielzahl von Kanälen von Einzelmodus-Pumplicht und Ausgeben der Vielzahl von Kanälen von Einzelmodus-Pumplicht; und
eine optische Schnittstelleneinheit (30), die dazu konfiguriert ist, über ein optisches Übertragungsmedium mit einem optischen Verstärker verbunden zu sein, um mindestens einen Kanal von Einzelmodus-Pumplicht in der Vielzahl von Kanälen von Einzelmodus-Pumplicht für einen entsprechenden optischen Verstärker über das optische Übertragungsmedium bereitzustellen, wobei sich die Pumplichtquelle außerhalb des optischen Verstärkers befindet,
wobei die Pumplichtquelle **dadurch gekennzeichnet ist, dass** sie ferner Folgendes umfasst:
einen Leistungsnivellierer (60), der dazu konfiguriert ist, die optische Leistung der Vielzahl von Kanälen des Einzelmodus-Pumplichts, das von dem Moduswandler (20) empfangen wird, zu mischen und dann eine Mittelwertzuweisung an der gemischten optischen Leistung durchzuführen, so dass die optische Leistung der ausgegebenen Vielzahl von Kanälen von Einzelmodus-Pumplicht die gleiche ist.

2. Pumplichtquelle nach Anspruch 1, wobei die Pumplichtquelle ferner Folgendes umfasst:
einen Modusfeldwandler (40), der dazu konfiguriert ist, eine Modusfeldangleichung zwischen einem Ausgabeende der Leuchteinheit (10) und einem Eingabeende des Moduswandlers (20) durchzuführen.

3. Pumplichtquelle nach Anspruch 2, wobei der Moduswandler (20) eine photonische Laterne vom Typ einer optischen Faser ist; und
der Modusfeldwandler (40) ein optischer Faser-Modusfeldwandler ist, ein Eingabeende des optischen Faser-Modusfeldwandlers an das Ausgabeende der Leuchteinheit (10) gekoppelt ist und ein Ausgabeende des optischen Faser-Modusfeldwandlers an ein Eingabeende der photonischen Laterne vom Typ einer optischen Faser gekoppelt ist.

4. Pumplichtquelle nach Anspruch 2, wobei der Moduswandler (20) eine photonische Laterne vom Typ eines Wellenleiters oder ein optischer Wandler mit mehreren Ebenen ist; und
der Modusfeldwandler (40) eine Linse umfasst, wobei sich die Linse auf einem optischen Pfad zwischen dem Ausgabeende der Leuchteinheit (10) und dem Moduswandler (20) befindet.

5. Pumplichtquelle nach Anspruch 1 oder 2, wobei der Moduswandler (20) Folgendes umfasst:
einen Faserlaser, der dazu konfiguriert ist, das Mehrmodus-Pumplicht, das durch die Leuchteinheit (10) ausgegeben wird, in einen Kanal von Einzelmodus-Pumplicht umzuwandeln, wobei der Faserlaser die Leuchteinheit (10) als eine Pumpquelle verwendet; und
einen optischen Splitter, der dazu konfiguriert ist, das Einzelmodus-Pumplicht, das durch den Faserlaser ausgegeben wird, in die Vielzahl von Kanälen von Einzelmodus-Pumplicht zu splitten.

6. Pumplichtquelle nach einem der Ansprüche 1 bis 5, wobei die Pumplichtquelle ferner Folgendes umfasst:
eine variable optische Dämpfungsanordung (50), die dazu konfiguriert ist, eine optische Leistung der Vielzahl von Kanälen von Einzelmodus-Pumplicht zu steuern.

7. Pumplichtquelle nach einem der Ansprüche 1 bis 6, wobei die optische Schnittstelleneinheit (30) eine optische Faserschnittstelle oder eine optische Rückplattenschnittstelle umfasst.

8. Pumplichtquelle nach einem der Ansprüche 1 bis 7, wobei die Leuchteinheit (10) Folgendes umfasst:
mindestens zwei Multimodus-Pumplaser (11), die jeweils dazu konfiguriert sind, einen Kanal von Multimodus-Pumplicht auszugeben; und
einen Leistungsstrahlkombinator (12), der zu Folgendem konfiguriert ist: Kombinieren von mindestens zwei Kanälen von Multimodus-Pumplicht, das durch die mindestens zwei Multimodus-Pumplaser (11) ausgegeben wird, in einen Kanal von Multimodus-Pumplicht und Ausgeben des einen Kanals von Multimodus-Pumplicht an den Moduswandler (20).

9. Optisches Verstärkungssystem, umfassend:
eine Pumplichtquelle (1), einen optischen Verstärker (2) und ein optisches Übertragungsmedium (3), wobei die Pumplichtquelle (1) die Pumplichtquelle nach einem der Ansprüche 1 bis 8 ist und das optische Übertragungsmedium dazu konfiguriert ist, mindestens einen Kanal von Einzelmodus-Pumplicht, das durch die Pumplichtquelle (1) ausgegeben wird, an den optischen Verstärker (2) zu übertragen.

10. Optisches Verstärkungssystem nach Anspruch 9, wobei der optische Verstärker (2) mindestens eine Stufe eines optischen Verstärkungspfads umfasst und eine beliebige Stufe des optischen Verstärkungspfads einen Wellenlängenmultiplexer und eine optische Faser umfasst;
der Wellenlängenmultiplexer dazu konfiguriert ist, empfangenes Signallicht und empfangenes Einzelmodus-Pumplicht in einen Kanal zu kombinieren und den Kanal an die optische Faser auszugeben; und
die optische Faser zu Folgendem konfiguriert ist: Verstärken des Signallichts unter Verwendung des empfangenen Einzelmodus-Pumplichts und Ausgeben des Signallichts nach der Verstärkung.

11. Optisches Verstärkungssystem nach Anspruch 10, wobei die beliebige Stufe des optischen Verstärkungspfads ferner Folgendes umfasst:
einen ersten Splitter (716), der dazu konfiguriert ist, das empfangene Einzelmodus-Pumplicht, das durch die Pumplichtquelle (1) bereitgestellt wird, in einen ersten Teil des Einzelmodus-Pumplichts und einen zweiten Teil des Einzelmodus-Pumplichts zu splitten;
einen ersten Detektor (717), der dazu konfiguriert ist, optische Leistung des ersten Teils des Einzelmodus-Pumplichts zu detektieren, um einen ersten Leistungswert zu erlangen; und
einen ersten variablen optischen Dämpfer (718), der zu Folgendem konfiguriert ist: Anpassen der optischen Leistung des empfangenen zweiten Teils des Einzelmodus-Pumplichts basierend auf dem ersten Leistungswert und Ausgeben des zweiten Teils des angepassten Einzelmodus-Pumplichts an den Wellenlängenmultiplexer.

12. Optisches Verstärkungssystem nach Anspruch 10 oder 11, wobei der optische Verstärker (2) ferner Folgendes umfasst: einen zweiten variablen optischen Dämpfer, der sich zwischen zwei benachbarten Stufen von optischen Verstärkungspfaden befindet und zu Folgendem konfiguriert ist: Anpassen der optischen Leistung des Signallichts, das durch einen optischen Verstärkungspfad einer vorherigen Stufe ausgegeben wird, und Ausgeben von angepasstem Signallicht an einen optischen Verstärkungspfad einer nächsten Stufe.

13. Optisches Verstärkungssystem nach Anspruch 12, wobei
der optische Verstärkungspfad (71) der ersten Stufe in der mindestens einen Stufe des optischen Verstärkungspfads ferner Folgendes umfasst:
einen zweiten Splitter (719), der dazu konfiguriert ist, empfangenes Signallicht in einen ersten Teil des Signallichts und einen zweiten Teil des Signallichts zu splitten;
einen zweiten Detektor (710), der dazu konfiguriert ist, optische Leistung des ersten Teils des Signallichts zu detektieren, um einen zweiten Leistungswert zu erlangen;
wobei ein optischer Verstärkungspfad der letzten Stufe in der mindestens einen Stufe des optischen Verstärkungspfads ferner Folgendes umfasst:
einen dritten Splitter (729), der dazu konfiguriert ist, empfangenes Signallicht in einen dritten Teil des Signallichts und einen vierten Teil des Signallichts zu splitten und den dritten Teil des Signallichts auszugeben; und
einen dritten Detektor (720), der dazu konfiguriert ist, optische Leistung des vierten Teils des Signallichts zu detektieren, um einen dritten Leistungswert zu erlangen, wobei
der zweite variable optische Dämpfer zu Folgendem konfiguriert ist: Anpassen, basierend auf dem zweiten Leistungswert und dem dritten Leistungswert, der optischen Leistung des empfangenen Signallichts, das durch den optischen Verstärkungspfad der vorherigen Stufe ausgegeben wird, und Ausgeben des zweiten Teils des angepassten Signallichts an den optischen Verstärkungspfad der nächsten Stufe.

14. Rekonfigurierbarer optischer Add-Drop-Multiplexer, umfassend eine Vielzahl von Platinen und das optische Verstärkungssystem nach einem der Ansprüche 9 bis 13, wobei der optische Verstärker (2) auf einer oder mehreren Platinen integriert ist und sich die Pumplichtquelle (1) und der optische Verstärker (2) auf separaten Platinen befinden.

## Revendications

1. Source de lumière de pompe, comprenant :
une unité émettrice de lumière (10), configurée pour émettre une lumière de pompe multimode ;
un convertisseur de mode (20), configuré pour : convertir la lumière de pompe multimode émise par l'unité émettrice de lumière (10) en une pluralité de canaux de lumière de pompe monomode, et émettre la pluralité de canaux de lumière de pompe monomode ; et
une unité d'interface optique (30), configurée pour être connectée à un amplificateur optique via un milieu de transmission optique, pour fournir au moins un canal de lumière de pompe monomode dans la pluralité de canaux de lumière de pompe monomode pour un amplificateur optique correspondant via le milieu de transmission optique, dans laquelle la source de lumière de pompe est située à l'extérieur de l'amplificateur optique,
dans laquelle la source de lumière de pompe est **caractérisée en ce qu'**elle comprend également :
un égaliseur de puissance (60), configuré pour mélanger la puissance optique de la pluralité de canaux de lumière de pompe monomode reçue à partir du convertisseur de mode (20) puis réaliser une allocation moyenne sur la puissance optique mélangée, de sorte que la puissance optique de la pluralité émise de canaux de lumière de pompe monomode est la même.

2. Source de lumière de pompe selon la revendication 1, dans laquelle la source de lumière de pompe comprend également :
un convertisseur de champ de mode (40), configuré pour réaliser une correspondance de champ de mode entre une extrémité de sortie de l'unité émettrice de lumière (10) et une extrémité d'entrée du convertisseur de mode (20).

3. Source de lumière de pompe selon la revendication 2, dans laquelle le convertisseur de mode (20) est une lanterne photonique de type fibre optique ; et
le convertisseur de champ de mode (40) est un convertisseur de champ de mode à fibre optique, une extrémité d'entrée du convertisseur de champ de mode à fibre optique est couplée à l'extrémité de sortie de l'unité émettrice de lumière (10), et une extrémité de sortie du convertisseur de champ de mode à fibre optique est couplée à une extrémité d'entrée de la lanterne photonique de type fibre optique.

4. Source de lumière de pompe selon la revendication 2, dans laquelle le convertisseur de mode (20) est une lanterne photonique de type guide d'ondes ou un convertisseur optique multiplan ; et
le convertisseur de champ de mode (40) comprend une lentille, dans laquelle la lentille est située sur un chemin optique entre l'extrémité de sortie de l'unité émettrice de lumière (10) et le convertisseur de mode (20).

5. Source de lumière de pompe selon la revendication 1 ou 2, dans laquelle le convertisseur de mode (20) comprend :
un laser à fibre, configuré pour convertir la lumière de pompe multimode émise par l'unité émettrice de lumière (10) en un canal de lumière de pompe monomode, dans laquelle le laser à fibre utilise l'unité émettrice de lumière (10) comme source de pompe ; et
un diviseur optique, configuré pour diviser la lumière de pompe monomode émise par le laser à fibre en la pluralité de canaux de lumière de pompe monomode.

6. Source de lumière de pompe selon l'une quelconque des revendications 1 à 5, dans laquelle la source de lumière de pompe comprend également :
un réseau d'atténuateurs optiques variables (50), configuré pour commander la puissance optique de la pluralité de canaux de lumière de pompe monomode.

7. Source de lumière de pompe selon l'une quelconque des revendications 1 à 6, dans laquelle l'unité d'interface optique (30) comprend une interface à fibre optique ou une interface de type backplane optique.

8. Source de lumière de pompe selon l'une quelconque des revendications 1 à 7, dans laquelle l'unité émettrice de lumière (10) comprend :
au moins deux lasers de pompe multimode (11), chacun étant configuré pour émettre un canal de lumière de pompe multimode ; et
un combinateur de faisceaux de puissance (12), configuré pour : combiner au moins deux canaux de lumière de pompe multimode émis par les au moins deux lasers de pompe multimode (11) en un canal de lumière de pompe multimode, et émettre le canal de lumière de pompe multimode vers le convertisseur de mode (20).

9. Système d'amplification optique, comprenant :
une source de lumière de pompe (1), un amplificateur optique (2) et un milieu de transmission optique (3), dans lequel la source de lumière de pompe (1) est la source de lumière de pompe selon l'une quelconque des revendications 1 à 8, et le milieu de transmission optique est configuré pour transmettre, à l'amplificateur optique (2), au moins un canal de lumière de pompe monomode émis par la source de lumière de pompe (1).

10. Système d'amplification optique selon la revendication 9, dans lequel l'amplificateur optique (2) comprend au moins un étage de chemin optique d'amplification, et tout étage de chemin optique d'amplification comprend un multiplexeur par répartition en longueur d'onde et une fibre optique ;
le multiplexeur par répartition en longueur d'onde est configuré pour combiner la lumière de signal reçue et la lumière de pompe monomode reçue en un seul canal et émettre le canal vers la fibre optique ; et
la fibre optique est configurée pour : amplifier la lumière de signal à l'aide de la lumière de pompe monomode reçue, et émettre la lumière de signal après l'amplification.

11. Système d'amplification optique selon la revendication 10, dans lequel tout étage de chemin optique d'amplification comprend également :
un premier diviseur (716), configuré pour diviser la lumière de pompe monomode reçue fournie par la source de lumière de pompe (1) en une première partie de lumière de pompe monomode et une seconde partie de lumière de pompe monomode ;
un premier détecteur (717), configuré pour détecter la puissance optique de la première partie de lumière de pompe monomode pour obtenir une première valeur de puissance ; et
un premier atténuateur optique variable (718), configuré pour : régler la puissance optique de la seconde partie reçue de lumière de pompe monomode sur la base de la première valeur de puissance, et émettre la seconde partie de lumière de pompe monomode réglée vers le multiplexeur par répartition en longueur d'onde.

12. Système d'amplification optique selon la revendication 10 ou 11, dans lequel l'amplificateur optique (2) comprend également : un second atténuateur optique variable, situé entre deux étages adjacents de chemins optiques d'amplification, et configuré pour : régler la puissance optique de lumière de signal émise par un chemin optique d'amplification d'étage précédent, et émettre la lumière de signal réglée vers un chemin optique d'amplification d'étage suivant.

13. Système d'amplification optique selon la revendication 12, dans lequel
un chemin optique d'amplification de premier étage (71) dans l'au moins un étage de chemin optique d'amplification comprend également :
un deuxième diviseur (719), configuré pour diviser la lumière de signal reçue en une première partie de lumière de signal et une deuxième partie de lumière de signal ;
un deuxième détecteur (710), configuré pour détecter la puissance optique de la première partie de lumière de signal pour obtenir une deuxième valeur de puissance ;
un chemin optique d'amplification de dernier étage dans l'au moins un étage de chemin optique d'amplification comprend également :
un troisième diviseur (729), configuré pour diviser la lumière de signal reçue en une troisième partie de lumière de signal et une quatrième partie de lumière de signal, et émettre la troisième partie de lumière de signal ; et
un troisième détecteur (720), configuré pour détecter la puissance optique de la quatrième partie de lumière de signal pour obtenir une troisième valeur de puissance, dans lequel
le second atténuateur optique variable est configuré pour : régler, sur la base de la deuxième valeur de puissance et de la troisième valeur de puissance, la puissance optique de la lumière de signal reçue émise par le chemin optique d'amplification d'étage précédent, et émettre la deuxième partie de lumière de signal réglée vers le chemin optique d'amplification d'étage suivant.

14. Multiplexeur optique add-drop reconfigurable, comprenant une pluralité de cartes et le système d'amplification optique selon l'une quelconque des revendications 9 à 13, dans lequel l'amplificateur optique (2) est intégré sur une ou plusieurs cartes, et la source de lumière de pompe (1) et l'amplificateur optique (2) sont situés sur des cartes séparées.
